# EUROPÄISCHE PATENTSCHRIFT

(11) **EP 3 905 494 B1**
(45) Veröffentlichungstag und Bekanntmachung des Hinweises auf die Patenterteilung: **04.06.2025**
(21) Anmeldenummer: 21170175.0
(22) Anmeldetag: 23.04.2021
(51) Int. Cl.: H02K 15/04, B21F 1/00

(54) **BIEGEVORRICHTUNG UND BIEGEVERFAHREN ZUM ZWEIDIMENSIONALEN BIEGEN EINES ELEKTRISCHEN LEITERS**
BENDING DEVICE AND BENDING METHOD FOR TWO-DIMENSIONAL BENDING OF AN ELECTRICAL CONDUCTOR
DISPOSITIF DE PLIAGE ET PROCÉDÉ DE PLIAGE DESTINÉS AU PLIAGE BIDIMENSIONNEL D'UN CONDUCTEUR ÉLECTRIQUE

(30) Priorität: 28.04.2020 DE 102020002545; 11.08.2020 EP 20190579
(43) Veröffentlichungstag der Anmeldung: 03.11.2021
(73) Patentinhaber: Grob-Werke GmbH & Co. KG, 87719 Mindelheim (DE)
(72) Erfinder: Dreher, Clemens, 87719 Mindelheim (DE)
(74) Vertreter: KASTEL Patentanwälte PartG mbB

(56) Entgegenhaltungen:
- DE-T5- 112014 006 245
- JP-A- 2011 036 874
- US-A1- 2011 278 980
- US-A1- 2014 300 236

## Beschreibung

Die Erfindung betrifft eine Biegevorrichtung zum zweidimensionalen, in oder parallel zu einer Biegeebene durchzuführenden Biegen eines elektrischen Leiters. Außerdem betrifft die Erfindung ein Biegeverfahren zum zweidimensionalen, in oder parallel zu einer Biegeebene durchzuführenden Biegen eines elektrischen Leiters. Weiter betrifft die Erfindung ein Computerprogrammprodukt mit Steueranweisungen zum Durchführen eines solchen Biegeverfahrens.

Ausführungsbeispiele der Erfindung befassen sich mit Vorrichtungen und Verfahren zum Durchführen eines Umformschritts eines elektrischen Leiters im Zuge der Serienherstellung eines Bauteils einer elektrischen Maschine.

Zum Stand der Technik und zum technologischen Hintergrund wird auf folgende Literaturstellen verwiesen:
[1] DE 10 2018 103 926 A1
[2] DE 10 2018 114 875 A1
[3] DE 10 2018 106 980 A1
[4] US 2018/0182544 Al
[5] DE 10 2018 106 980 A1
[6] JP 6423931 B1
[7] Wikipedia-Artikel "Gesenkbiegen", heruntergeladen unter https://de.wikipedia.org/wiki/Gesenkbiegen, am 07.07.2020
[8] US 2014/300236 A1
[9] JP 2011 036874 A
[10] US 2011/278980 A1
[11] DE 11 2014 006245 T5

Die Literaturstellen [1] und [2] beschreiben Beispiele für eine Serienherstellung eines Bauteils einer elektrischen Maschine mit Leitern, die in einem von mehreren Umformschritten gemäß dem hier in Rede stehenden zweidimensionalen Biegen geformt sind. Die Leiter sind dabei haarnadelförmig gebogen. Aufgrund der Haarnadelform werden die Leiter auch Hairpins genannt. Der aus "Hairpin" abgeleitete Begriff "Pin" wird im Folgenden auch als Synonym für Leiter verwendet. Ausführungsbeispiele der Erfindung befassen sich mit der zweidimensionalen Biegung insbesondere von U-förmigen oder I-förmigen Leitern, die im Folgenden auch als U-Pins bzw. I-Pins bezeichnet werden.

Die Literaturstellen [3] und [4] offenbaren Vorrichtungen und Verfahren zum sogenannten Rotationszugbiegen, bei dem ein Leiter in einer einzelnen Biegeeinheit mittels eines sich auf einer Kreisbahn bewegenden Erfassungselements um eine Biegefläche herum gebogen wird.

Die Literaturstellen [5] und [6] sowie [9] offenbaren Vorrichtungen und Verfahren, bei denen Leiter mittels einer Biegekette zu wellenförmigen Drähten gebogen werden.

Die Literaturstellen [7], [10] und [11] beschreiben ein Umformen mittels Gesenkbiegen, bei dem ein Umformen zwischen einem beweglichen Stempel und einer Matrize erfolgt, wobei eine Formfläche an dem Stempel und eine komplementäre Formfläche an der Matrize ausgebildet ist. Das Gesenkbiegen wird meist zum Abkanten von Blechen verwendet. Gemäß Literaturstellen [10] und [11] lässt sich das Gesenkbiegen mit den festen Formen am Stempel und Formfläche auch zum Umbiegen von Leitern im Zuge der Herstellung einer Statorwicklungsspule einsetzen.

Bei der Literaturstelle [8], die die Merkmale des Oberbegriffs der unabhängigen Ansprüche offenbart, wird ein Leiter an Biegeeinheiten mit Formkörpern geformt. Äußere erste und zweite Biegeeinheiten haben jeweils ein Erfassungselement zum Umbiegen des Leiters um die Formkörper. Die Erfassungselemente führen lediglich lineare Bewegungen auf den Formkörper zu aus. Die Formkörper sind als Fixpunkte beschrieben, die beim Biegevorgang stationär sind. Es kann eine fest vorgegebene komplexe Form eines Wicklungskopfes einer Statorwicklung an einer Anzahl Leiterstücken wiederholt hergestellt werden.

Die Erfindung hat sich zur Aufgabe gestellt, eine Biegevorrichtung und ein Biegeverfahren zum zweidimensionalen, in oder parallel zu einer Biegeebene durchzuführenden Biegen eines elektrischen Leiters zur Verfügung zu stellen, mit denen das Biegen mit hohen Taktraten und relativ schnell und dennoch an unterschiedliche Dimensionen und Biegeformen anpassbar durchgeführt werden kann.

Zum Lösen dieser Aufgabe schafft die Erfindung eine Biegevorrichtung und ein Biegeverfahren nach den unabhängigen Ansprüchen.

Vorteilhafte Ausgestaltungen sind Gegenstand der Unteransprüche.

Die Erfindung schafft gemäß einem ersten Aspekt davon eine Biegevorrichtung zum zweidimensionalen, in oder parallel zu einer Biegeebene durchzuführenden Biegen eines elektrischen Leiters, umfassend eine erste und eine zweite Biegeeinheit und eine Relativbewegungseinrichtung zum Relativbewegen der ersten und zweiten Biegeeinheit in oder parallel zu der Biegeebene, wobei jede Biegeeinheit einen sich quer zu der Biegeebene erstreckenden Formflächenkörper mit einer als Formfläche zum Formen eines Biegebereichs des Leiters ausgebildeten Umfangsfläche aufweist, wobei die erste Biegeeinheit ein erstes Erfassungselement und ein zweites Erfassungselement aufweist und die zweite Biegeeinheit ein erstes Erfassungselement und ein zweites Erfassungselement aufweist, wobei das erste und das zweite Erfassungselement der ersten Biegeeinheit relativ zueinander beweglich sind und jeweils entlang einer Bewegungsbahn um die Umfangsfläche des Formflächenkörpers der ersten Biegeeinheit bewegbar sind zum Erfassen eines ersten Biegebereichs und zum Umbiegen des ersten Biegebereichs um den Formflächenkörper der ersten Biegeeinheit, wobei das erste Erfassungselement und das zweite Erfassungselement der zweiten Biegeeinheit relativ zueinander beweglich sind und jeweils entlang einer Bewegungsbahn um die Umfangsfläche des Formflächenkörpers der zweiten Biegeeinheit bewegbar sind zum Erfassen eines zweiten Biegebereichs und zum Umbiegen des zweiten Biegebereichs um den Formflächenkörper der zweiten Biegeeinheit.

Es ist bevorzugt, dass eine dritte Biegeeinheit vorgesehen ist, die ebenfalls einen sich quer zu der Biegeebene erstreckenden Formflächenkörper mit einer als Formfläche zum Formen eines dritten Biegebereichs des Leiters ausgebildeten Umfangsfläche und ein erstes Erfassungselement oder ein erstes und ein zweites Erfassungselement aufweist, wobei das oder die die Erfassungselement(e) entlang einer Bewegungsbahn um die Umfangsfläche oder mit wenigstens einer Richtungskomponente parallel zu einer Tangente an der Umfangsfläche bewegbar sind zum Erfassen und/oder Umbiegen des dritten Biegebereichs um den Formflächenkörper der dritten Biegeeinheit, wobei die Relativbewegungseinrichtung zum Relativbewegen der ersten bis dritten Biegeeinheit in oder parallel zu der Biegeebene ausgebildet ist.

Es ist bevorzugt, dass die Relativbewegungseinrichtung eine erste Bewegungseinrichtung zum Bewegen der ersten Biegeeinheit in der Biegeebene aufweist.

Es ist bevorzugt, dass die Relativbewegungseinrichtung eine zweite Bewegungseinrichtung zum Bewegen der zweiten Biegeeinheit in der Biegeebene aufweist.

Es ist bevorzugt, dass die Relativbewegungseinrichtung eine dritte Bewegungseinrichtung zum Bewegen der dritten Biegeeinheit in der Biegeebene aufweist.

Es ist bevorzugt, dass die Relativbewegungseinrichtung zum linearen Bewegen wenigstens einer, mehrerer oder aller der Biegeeinheiten ausgebildet ist.

Es ist bevorzugt, dass die Relativbewegungseinrichtung eine erste bis dritte Bewegungseinheit aufweist, die zum relativen Bewegen zueinander ausgebildet sind, wobei die erste Biegeeinheit auf der ersten Bewegungseinheit angeordnet ist, die zweite Biegeeinheit auf der zweiten Bewegungseinheit angeordnet ist und die dritte Biegeeinheit auf der dritten Bewegungseinheit angeordnet ist.

Es ist bevorzugt, dass jede Biegeeinheit den Formflächenkörper als Biegeelement aufweist und ihre Erfassungselemente als um eine Mittelachse des Formflächenkörpers drehbare Rotationselemente ausgebildet sind.

Es ist bevorzugt, dass die Umfangsfläche eine in bezüglich einer Mittelachse des Formflächenkörpers axialer Draufsicht gesehen kreisförmig oder kreissegmentförmige Anlagefläche aufweist, deren Mittelpunkt dem Mittelpunkt der Biegung entspricht.

Erfindungsgemäß ist vorgesehen, dass das erste und das zweite Erfassungselement einer jeweiligen Biegeeinheit relativ zueinander beweglich sind.

Es ist bevorzugt, dass das erste und das zweite Erfassungselement derart bewegbar sind, dass sie den Leiter um den Formflächenkörper herum umbiegen.

Es ist bevorzugt, dass das erste und/oder das zweite Erfassungselement eine ebene Erfassungsfläche zum Gegenhalten und/oder Formen des Leiters aufweisen.

Es ist bevorzugt, dass das erste und das zweite Erfassungselement wenigstens einer der Biegeeinheiten in einer Grundstellung aneinander anliegen und aus der Grundstellung heraus voneinander weg bewegbar sind.

Erfindungsgemäß ist vorgesehen, dass die Bewegungsbahn des ersten und/oder zweiten Erfassungselements wenigstens einer, mehrerer oder aller der Biegeeinheiten eine um die Umfangsfläche herum führende gekrümmte Kurve ist.

Es ist bevorzugt, dass die Bewegungsbahn des ersten und/oder zweiten Erfassungselements wenigstens einer, mehrerer oder aller der Biegeeinheiten in einem Winkelbereich von mehr als 180° um den Formflächenkörper herum führt.

Es ist bevorzugt, dass das erste und/oder zweite Erfassungselements wenigstens einer, mehrerer oder aller der Biegeeinheiten um 360° um den Formflächenkörper herum bewegbar ist.
Es ist bevorzugt, dass das erste Erfassungselement um eine Mittelachse des Formflächenkörpers herum kreisförmig bewegbar ist. Die somit als Kreisbahn ausgebildete gekrümmte Bewegungsbahn des ersten Formflächenköpers erstreckt sich weiter bevorzugt um mehr als 180°, insbesondere um 360° um den Formflächenkörper herum.

Es ist bevorzugt, dass das zweite Erfassungselement um eine Mittelachse des Formflächenkörpers herum kreisförmig bewegbar ist. Die somit als Kreisbahn ausgebildete gekrümmte Bewegungsbahn des zweiten Formflächenköpers erstreckt sich weiter bevorzugt um mehr als 180°, insbesondere um 360° um den Formflächenkörper herum.

Der Begriff "Bewegungsbahn" der Erfassungselement bezeichnet hier die mögliche Bewegungsbahn, auf der sich die Erfassungselemente bewegen können. Die Erfassungselemente sind so geführt, dass sie sich um mehr als 180° um den Formflächenkörper herum bewegen können. Damit kann ein großer Bereich von Biegungen erreicht werden. Bei den Biegevorgängen muss natürlich nicht die gesamte Bewegungsbahn ausgenutzt werden, es können z.B. Biegevorgänge programmiert werden, wo die Erfassungselemente nur einen Teil ihrer möglichen Bewegungsbahn nutzen.

Es ist bevorzugt, dass die erste und die dritte Biegeeinheit entlang einer ersten linearen Bewegungsrichtung aufeinander zu und voneinander weg bewegbar sind und die zwischen der ersten und der dritten Biegeeinheit angeordnete zweite Biegeeinheit in einer zweiten linearen Bewegungsrichtung bewegbar ist, die sich quer zu der ersten Bewegungsrichtung erstreckt.

Es ist bevorzugt, dass die Bewegung der Erfassungselemente unterschiedlicher Biegeeinheiten unterschiedlich bewegbar und/oder ansteuerbar sind.

Gemäß einem weiteren Aspekt schafft die Erfindung ein Biegeverfahren zum zweidimensionalen, in oder parallel zu einer Biegeebene durchzuführendes Biegen eines elektrischen Leiters, umfassend: Einführen des Leiters in eine sich in einer Grundstellung befindlichen Biegevorrichtung nach einer der voranstehenden Ausgestaltungen und Biegen des Leiters durch Relativbewegen der Biegeeinheiten und Bewegen der Erfassungselemente der Biegeeinheiten entlang der Bewegungsbahn.

Bei einer ersten bevorzugten Ausgestaltung, die vorzugsweise zum Biegen eines U-förmigen Leiters dient, umfasst das Biegeverfahren vorzugsweise den Schritt:
a) Einstellen der Grundstellung derart, dass alle Formflächenkörper der ersten bis dritten Biegeeinheit auf einer Seite des zu biegenden Leiters und alle Erfassungselemente der ersten bis dritten Biegeeinheit auf der anderen Seite des zu biegenden Leiters angeordnet sind.

Bei der ersten bevorzugten Ausgestaltung umfasst das Biegeverfahren vorzugsweise den Schritt: b) aufeinander zu Bewegen der ersten und dritten Biegeeinheit in einer ersten Bewegungsrichtung und Bewegen der zwischen der ersten und dritten Biegeeinheit angeordneten zweiten Biegeeinheit in einer zweiten, quer zu der ersten Bewegungsrichtung verlaufenden Bewegungsrichtung von der ersten und dritten Biegeeinheit weg.

Bei der ersten bevorzugten Ausgestaltung umfasst das Biegeverfahren vorzugsweise den Schritt: c) voneinander weg Drehen des ersten und des zweiten Erfassungselements der zweiten Biegeeinheit in entgegengesetzter Drehrichtung.

Bei der ersten bevorzugten Ausgestaltung umfasst das Biegeverfahren vorzugsweise den Schritt: d) Entnehmen des fertig gebogenen Leiters.

Bei der ersten bevorzugten Ausgestaltung umfasst das Biegeverfahren vorzugsweise den Schritt: e) Zurückfahren der Biegevorrichtung nach Entnahme des fertig gebogenen Leiters in die Grundstellung.

Vorzugsweise weist die erste Ausgestaltung des Biegeverfahrens alle oben genannten Schritte a) bis e) auf. Vorzugsweise wird bei der ersten Ausgestaltung das Biegeverfahren in der Schrittfolge a) bis e) durchgeführt und dann mit einem neuen Leiter wiederholt.

Bei einer zweiten bevorzugten Ausgestaltung, die vorzugsweise zum Biegen eines insbesondere gekröpften I-förmigen Leiters dient, umfasst das Biegeverfahren vorzugsweise den Schritt:
i) Einstellen der Grundstellung derart, dass der Formflächenkörper der ersten Biegeeinheit und die Erfassungselemente der zweiten Biegeeinheit auf einer Seite des zu biegenden Leiters und der Formflächenkörper der zweiten Biegeeinheit und das wenigstens eine Erfassungselemente der ersten Biegeeinheit auf der anderen Seite des zu biegenden Leiters angeordnet sind.

Bei einer zweiten bevorzugten Ausgestaltung, die vorzugsweise zum Biegen eines insbesondere gekröpften I-förmigen Leiters dient, umfasst das Biegeverfahren vorzugsweise den Schritt:
ii) Bewegen der ersten Biegeeinheit in einer ersten Bewegungsrichtung auf die zweite Biegeeinheit zu und Wegbewegen der zweiten Biegeeinheit in einer zweiten, quer zu der ersten Bewegungsrichtung verlaufenden Bewegungsrichtung von der ersten Biegeeinheit weg.

Bei einer zweiten bevorzugten Ausgestaltung, die vorzugsweise zum Biegen eines insbesondere gekröpften I-förmigen Leiters dient, umfasst das Biegeverfahren vorzugsweise den Schritt:
iii) Drehen des wenigstens einen Erfassungselements der ersten Biegeeinheit, insbesondere durch voneinander weg Drehen des ersten und des zweiten Erfassungselements der ersten Biegeeinheit in entgegengesetzter Drehrichtung, und voneinander weg Drehen des ersten und des zweiten Erfassungselements der zweiten Biegeeinheit in entgegengesetzter Drehrichtung.

Bei einer zweiten bevorzugten Ausgestaltung, die vorzugsweise zum Biegen eines insbesondere gekröpften I-förmigen Leiters dient, umfasst das Biegeverfahren vorzugsweise den Schritt:
iv) Drehen des wenigstens einen Erfassungselements der ersten Biegeeinheit entgegengesetzt zum Drehen der Erfassungselemente der zweiten Biegeeinheit.

Bei einer zweiten bevorzugten Ausgestaltung, die vorzugsweise zum Biegen eines insbesondere gekröpften I-förmigen Leiters dient, umfasst das Biegeverfahren vorzugsweise den Schritt:
v) Entfernen der Elemente der dritten Biegeeinheit, falls an der Biegevorrichtung vorhanden, für den gesamten Biegevorgang aus dem Biegeweg des Leiters.

Bei einer zweiten bevorzugten Ausgestaltung, die vorzugsweise zum Biegen eines insbesondere gekröpften I-förmigen Leiters dient, umfasst das Biegeverfahren vorzugsweise den Schritt:
vi) Entnehmen des fertig gebogenen Leiters.

Bei einer zweiten bevorzugten Ausgestaltung, die vorzugsweise zum Biegen eines insbesondere gekröpften I-förmigen Leiters dient, umfasst das Biegeverfahren vorzugsweise den Schritt: Zurückfahren der Biegevorrichtung nach Entnahme des fertig gebogenen Leiters in die Grundstellung.

Vorzugsweise weist die zweite Ausgestaltung des Biegeverfahrens alle oben genannten Schritte i) bis vi) auf. Vorzugsweise wird bei der zweiten Ausgestaltung das Biegeverfahren in der Schrittfolge v), i) bis iv) und vi) durchgeführt, wobei dann vorzugsweise die Schrittfolge i) bis iv) und vi) mit einem neuen Leiter wiederholt wird. Wird das Biegeverfahren gemäß der zweiten Ausgestaltung mit einer Biegevorrichtung durchgeführt, die in der Grundstellung eine mittlere und zwei äußere Biegeeinheiten aufweist, kann wahlweise eine der beiden äußeren Biegeeinheiten als erste Biegeeinheit und die mittlere als zweite Biegeeinheit und die andere äußere Biegeeinheit als dritte Biegeeinheit dienen. Je nach Auswahl der einen oder der anderen äußeren Biegeeinheit als erste Biegeeinheit kann eine Kröpfung auf die eine oder andere Seite hin erfolgen.

Vorzugsweise liegen das erste und das zweite Erfassungselement der jeweiligen Biegeeinheit in der Grundstellung gemäß einer oder mehreren der zuvor erläuterten Ausgestaltungen des Biegeverfahrens aneinander an.

Vorzugsweise umfasst eine Biegevorrichtung nach einer der oben beschriebenen Ausgestaltungen eine Steuerung, die dazu eingerichtet ist, die Biegevorrichtung zum Durchführen des Biegeverfahrens nach einer der voranstehenden Ausgestaltungen anzusteuern.

Vorzugsweise weisen die Bewegungseinheiten der Relativbewegungseinrichtung jeweils einen eigenen Aktor auf, mit dem jeweils die Bewegung einer der Biegeeinheiten angetrieben wird, und das wenigstens eine Erfassungselement jeder Biegeeinheit ist durch einen weiteren Aktor angetrieben, und die Steuerung ist dazu ausgebildet, jeden der Aktoren anzusteuern.

Gemäß einem weiteren Aspekt schafft die Erfindung ein Computerprogrammprodukt, umfassend maschinenlesbare Steueranweisungen, die wenn in eine Steuerung einer Biegevorrichtung nach einer der oben beschriebenen Ausgestaltungen geladen, die Biegevorrichtung veranlassen, das Biegeverfahren nach einer der voranstehenden Ausgestaltungen durchzuführen.

Im Folgenden werden Vorteile bevorzugter Ausgestaltungen der Erfindung näher erläutert.

Ausführungsbeispiele der Erfindung betreffen Vorrichtungen und Verfahren zum synchronen Biegen von Draht für die Herstellung von Maschinenelementen elektrischer Maschinen.

Eine bevorzugte Ausgestaltung der Biegevorrichtung weist drei Bewegungseinheiten auf, die sich relativ zueinander bewegen. Auf jeder Bewegungseinheit befindet sich eine Biegeeinheit. Die Biegeeinheiten werden also mittels der jeweiligen Bewegungseinheit relativ zueinander bewegt. Die Biegeeinheit weist jeweils einen Formflächenkörper und ein erstes und ein zweites Erfassungselement auf. Bei einigen Ausführungsformen weist eine mittlere Biegeeinheit das erste und das zweite Erfassungselement auf, während eine oder beide der äußeren Biegeeinheiten nur ein Erfassungselement aufweisen. Vorzugsweise sind die Erfassungselemente als Rotationselemente aufgebaut, die sich um eine Drehachse drehen können.

Der Formflächenkörper besitzt vorzugsweise eine runde Anlagefläche - Umfangsfläche, dient als Formfläche - und hat einen Mittelpunkt, der dem Mittelpunkt der Biegung entspricht. Um den als Biegeelement wirkenden Formflächenkörper herum wird der Draht im Prozess ausgeformt.

Das erste und das zweite, vorzugsweise als Rotationselement ausgebildete Erfassungselement können sich relativ zueinander bewegen. Vorzugsweise entspricht der Mittelpunkt der Drehbewegung der beiden Rotationselemente dem Mittelpunkt des Formflächenkörpers. Die Erfassungselemente formen den Draht um den als Biegeelement wirkenden Formflächenkörper herum aus. Die Erfassungselemente haben dabei die Aufgabe, den Draht zu biegen und/oder den Draht gegenzuhalten, um ungewünschte Ausformungen des Drahtes zu vermeiden.

Die Bewegungen der Bewegungseinheiten und die Bewegungen der Erfassungselemente sind nicht miteinander mechanisch gekoppelt, sondern vorzugsweise jeweils individuell einstellbar oder programmierbar. Vorzugsweise weist die Biegevorrichtung wenigstens einen Aktor pro Bewegungseinheit und pro Bewegungseinheit wenigstens einen weiteren Aktor für das oder die Erfassungselemente auf. Vorzugsweise ist pro Biegeeinheit ein erster Erfassungselementaktor zum Bewegen des ersten Erfassungselements und ein zweiter Erfassungselementaktor zum Bewegen des zweiten Erfassungselements vorgesehen.

Vorteile bevorzugter Ausgestaltungen der Erfindung sind:
- Es sind sehr geringe Taktzeiten möglich, weil alle Biegungen gleichzeitig eingebracht werden und der Hub der Bewegungseinheiten sehr gering ist. Vorzugsweise entspricht der maximale Hub der Bewegungseinheiten dem Hub bei einem vergleichbaren Biegevorgang mittels eines aus [7] bekannten Gesenkbiegens.
- Höchste Flexibilität: es können z.B. auf einer bevorzugten Anlage U-Pins und I-Pins in den verschiedensten Abmessungen hergestellt werden.
- Die Biegevorrichtung ist einfach in eine größere Herstellanlage zum Herstellen eines Bauteils einbindbar. Insbesondere lassen sich Koordinatenachsen der Biegevorrichtung und der Herstellanlage einfach kombinieren. Zum Beispiel befindet sich bei einer bevorzugten Ausgestaltung der Biegevorrichtung die horizontale Koordinaten-Achse auf der Höhe der beiden Schenkelbiegungen (x-Achse), die vertikale Koordinaten-Achse befindet sich auf der Dachspitze (y-Achse).
- Es ist ein wiederholgenaues Biegen an den definierten Umformstellen möglich.
- Es gibt nur geringe Relativbewegung zwischen Werkzeug und Werkstück. Dadurch lassen sich Risiken einer Beschädigung des Leiters oder dessen Isolation verringern oder vermeiden.
- Einstellmöglichkeiten, z.B. während Inbetriebnahme, sind ohne Umbau, sondern lediglich über Anpassung der Biegeparameter in einer hinterlegten Steuerungssoftware möglich. Somit sind die Biegevorrichtungen und das Biegeverfahren gemäß Ausführungsformen der Erfindung sehr bedienerfreundlich bei Inbetriebnahme und im Prozess.

Im Gegensatz zu den bisher bekannten Biegeverfahren, wie insbesondere der Literaturstelle [8] bewegen sich bei mehreren Biegeelementen jeweils mehrere Erfassungselemente entlang einer Bewegungsbahn um die Umfangsfläche des Formflächenkörpers herum. Dadurch sind genaue Biegungen bei großer Flexibilität möglich.

Es lassen sich ähnliche Taktzeiten wie bei einem Gesenkbiegen erreichen, auch ist nur ein geringer Hub wie bei dem Gesenkbiegen nötig. Auch lässt sich, ähnlich wie beim Gesenkbiegen, eine sehr hohe Wiederholgenauigkeit erzielen. Allerdings ist das Biegeverfahren gemäß Ausgestaltungen der Erfindung gegenüber dem Gesenkbiegen sehr viel flexibler, z.B. lassen sich andere Formen oder andere Abmessungen des geformten Leiters einfach nur durch Änderung der Biegeparameter - insbesondere Bewegungshub von Bewegungseinheiten und Erfassungselementen - erreichen. Außerdem lassen sich Relativbewegungen vermeiden. Bei Ausgestaltungen der Erfindung ist der Aufbau einfach und dennoch lassen sich auch Hinterschneidungen in der Pingeometrie und Überbiegungen ohne hohe Werkzeugkosten erreichen. Anders als beim Gesenkbiegen, wo jede Änderung über ein neues Werkzeug erfolgen muss, können bei Ausgestaltungen der Erfindung leicht Änderungen und Korrekturen in der Geometrie der umgebogenen Leiter, einfach durch Änderung der Bewegungsparameter der Biegeeinheiten und Erfassungselemente, erreichen.

Ein Rotationszugbiegen gemäß [3] und [4] ermöglicht gegenüber dem Gesenkbiegen zwar eine größere Flexibilität und eine geringere Relativbewegung, dies ist aber je nach Anzahl der durchzuführenden Biegungen nur durch eine weitaus größere Taktzeit erreichbar. Außerdem lassen sich Koordinatenachsen und die aus Koordinaten über die Pinform erhaltenen Informationen nur schwer in einen Gesamtherstellprozess eines Bauteils einbinden. Diese Nachteile eines Rotationszugbiegeverfahrens werden durch Ausführungsbeispiele der Erfindung überwunden. Ausgestaltungen der Erfindung kombinieren somit Vorteile von Gesenkbiegen und Rotationszugbiegen, ohne deren Nachteile aufzuweisen. Wie beim Rotationszugbiegen lässt sich bei bevorzugten Ausgestaltungen der Erfindung ein sehr flexibles Umformverfahren erreichen, bei dem jeder Biegeparameter durch Änderung in der Steuerung sehr leicht angepasst werden kann. Es sind Einstellmöglichkeiten während der Inbetriebnahme ohne Umbau möglich. Die Relativbewegungen zwischen Werkzeug und Draht sind sehr gering. Die Umformung wird nur dort eingebracht, wo eine Umformung gefordert wird. Dennoch sind hohe Taktzeiten möglich, insbesondere dadurch, dass mehrere Biegungen auf einmal eingebracht werden können.

Wie bei Biegeketten lassen sich mit Ausführungen der Erfindung alle Biegungen gleichzeitig durchführen und ein Draht zum Umformen kann durchgehend geführt werden. Auch sind die Biegungen bei Ausführungen der Erfindung sehr wiederholgenau. Gegenüber Biegen mit Biegeketten ist jedoch eine weitaus größere Flexibilität erreichbar. Es lassen sich auch einzelne U-Pins und I-Pins mit unterschiedlichen Abmessungen ohne Umbaumaßnahmen auf einer Anlage herstellen. Außerdem ist der maschinelle Aufwand viel geringer, und die Biegevorrichtung gemäß Ausgestaltungen der Erfindung ist einfacher in eine Gesamtherstellanlage einbindbar - insbesondere aufgrund der vorteilhaften Möglichkeit, die Koordinatenachsen optimal zu wählen. Auch sind gegenüber Biegeketten mit Ausgestaltungen der Erfindung Relativbewegungen zwischen Werkzeug und Draht viel geringer. Ein Auswerfen des fertig gebogenen Drahtes ist bei Ausgestaltungen der Erfindung viel einfacher, der Draht kann sich weniger leicht verklemmen wie in einer Biegekette.

Ein Ausführungsbeispiel wird im Folgenden anhand der beigefügten Zeichnungen näher erläutert. Darin zeigt:
Fig. 1 eine Draufsicht auf zwei unterschiedlich dimensionierte Leiter für ein Bauteil einer elektrischen Maschine, die in einer Biegevorrichtung zu einer U-Form oder Haarnadelform geformt worden sind, wobei die Leiter in einem Koordinatensystem der Biegevorrichtung in einer x-y-Ebene dargestellt sind, die eine Biegeebene zum Umformen der Leiter darstellt;
Fig. 2 eine Draufsicht auf eine erste Ausführungsform der Biegevorrichtung in Ansicht auf die x-y-Ebene in einer Grundstellung, in der gerade ein zu der U-Form umzuformender Leiter in einer ersten bis dritten Biegeeinheit der Biegevorrichtung aufgenommen worden ist, als erster Schritt eines Biegeverfahrens zum 2D-Biegen der U-Form;
Fig. 3 eine vergrößerte Draufsicht einer der Biegeeinheiten der Biegevorrichtung von Fig. 2 in einer zweiten Stellung;
Fig. 4 ein vergrößertes Detail aus Fig. 2 mit einer Darstellung möglicher Bewegungen der Biegeeinheiten und der x-y-Ebene;
Fig. 5 eine Darstellung wie Fig. 3 mit einer Darstellung möglicher Bewegungen von Erfassungselementen der Biegeeinheiten;
Fig. 6 eine Darstellung wie in Fig. 4, in der die möglichen Bewegungen der Biegeeinheiten und deren Erfassungselemente dargestellt sind;
Fig. 7 eine Darstellung wie in Fig. 4, wobei die Biegevorrichtung in der zweiten Stellung zum Durchführen eines Schritts des Biegeverfahrens zum Umformen des Leiters in die U-Form dargestellt ist;
Fig. 8 eine Draufsicht auf die Biegevorrichtung wie in Fig. 2, wobei die Biegevorrichtung in einer dritten Stellung während eines weiteren Schritts des Biegeverfahrens dargestellt ist;
Fig. 9 eine Darstellung vergleichbar zu Fig. 5, wobei die Biegevorrichtung in einer Endstellung während eines weiteren Schritts des Biegeverfahrens ist, bei dem der Leiter seine endgültige U-Form erhält;
Fig. 10 eine Draufsicht, auf die x-y-Ebene gesehen, der ersten bis dritten Biegeeinheit der ersten Ausführungsform in einer Grundstellung zur Aufnahme eines zu einer I-Form (mit Kröpfung) umzuformenden Leiters als ersten Schritt eines Biegeverfahrens zum 2D-Biegen der I-Form;
Fig. 11 eine Draufsicht auf die Biegevorrichtung in einer zweiten Stellung zum Durchführen eines weiteren Schritts des Biegeverfahrens zum 2D-Biegen der I-Form;
Fig. 12 und 13 weitere Stellungen der Biegevorrichtung zum Durchführen weiterer Schritte des Biegeverfahrens für die I-Form; und
Fig. 14 bis 16 Draufsichten auf die Biegeeinheiten der Biegevorrichtung in unterschiedlichen Stellungen zum Durchführen einer Variante des Biegeverfahrens für die I-Form.

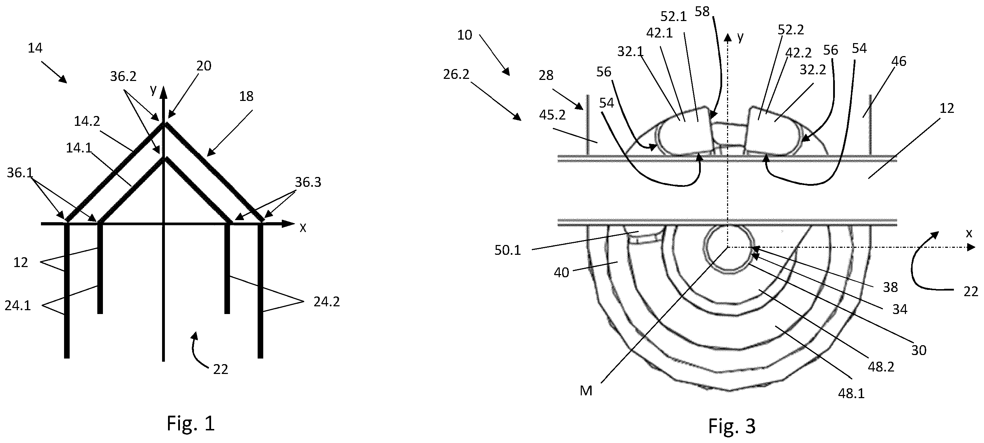

Fig. 1 zeigt zwei unterschiedlich dimensionierte Beispiele eines U-Pins 14, 14.1, 14.2 als Beispiele eines zu formenden Leiters 12 in einem Koordinatensystem einer Biegevorrichtung 10. Es sind ein kleinerer U-Pin 14.1 und ein größerer U-Pin 14.2 gezeigt, die sich beide ohne Umbaumaßnahmen, einfach durch Änderung von Steuerungsparametern in der Biegevorrichtung 10 formen lassen. In den weiteren Figuren sind unterschiedliche Ausführungsformen der Biegevorrichtung 10 zum zweidimensionalen Biegen des Leiters 12 während unterschiedlicher Schritte von unterschiedlichen Biegeverfahren zum zweidimensionalen Biegen des Leiter 12 gemäß Ausgestaltungen der Erfindung gezeigt.

Ausgestaltungen der Erfindung befassen sich demnach mit einen Umformschritt eines elektrischen Leiters 12. Es ist bevorzugt, dass der elektrische Leiter 12 ein Endlosmaterial oder ein Materialabschnitt, beispielsweise eines Drahts, ist. Der Umformschritt lässt sich im Wesentlichen unabhängig vom Querschnitt des Leiters 12 durchführen. Der Querschnitt kann z.B. rechteckig, quadratisch, rund, oval etc. sein. Insbesondere dienen die Biegevorrichtung 10 und das Biegeverfahren gemäß Ausgestaltungen der Erfindung dazu, einen elektrischen Leiter 12, der später Einsatz in einer elektrischen Maschine finden soll, umzuformen. Besonders bevorzugt können sämtliche Formen an Pins erzeugt werden. Aufgrund eines bevorzugten Anwendungsgebietes im Bereich Hairpintechnologie liegt der Fokus bevorzugter Ausgestaltungen der Erfindung auf U-Pins 14 und I-Pins 16.

Ausgestaltungen der Erfindung sollen insbesondere in Herstellverfahren zur Serienherstellung eines Bauteils einer elektrischen Maschine verwendet werden. Bei bevorzugten Herstellverfahren, wie z.B. zum Herstellen eines Stators oder Rotors eines als Fahrmotor für Elektrofahrzeuge einzusetzenden Elektromotors, wird zwischen mehreren Umformschritten unterschieden. Damit ist nicht ausgeschlossen, dass die im Folgenden aufgezählten Umformschritte im Prozess auch zusammengefasst werden können bzw. zeitgleich in das Werkstück eingebracht werden können. Nichtsdestotrotz lassen sich die Umformschritte im Bereich Hairpintechnologie (zur Erläuterung des Begriffs und zu weiteren Einzelheiten eines Herstellverfahrens eines Bauteils einer elektrischen Maschine unter Einsatz der Hairpintechnologie wird auf die Literaturstellen [1] und [2] verwiesen) in drei Schritte unterteilen. Die Umformschritte beziehen sich auf U-Pins 14 und I-Pins 16 (bei I-Pins wird häufig auf die Sprung-Biegung verzichtet). Auch die Reihenfolge dieser drei Umformschritte kann sich unterscheiden: Die folgende Beschreibung bezieht sich auf folgende Reihenfolge: "2D-Biegung" - "Sprung-Biegung" - "3D-Biegung"

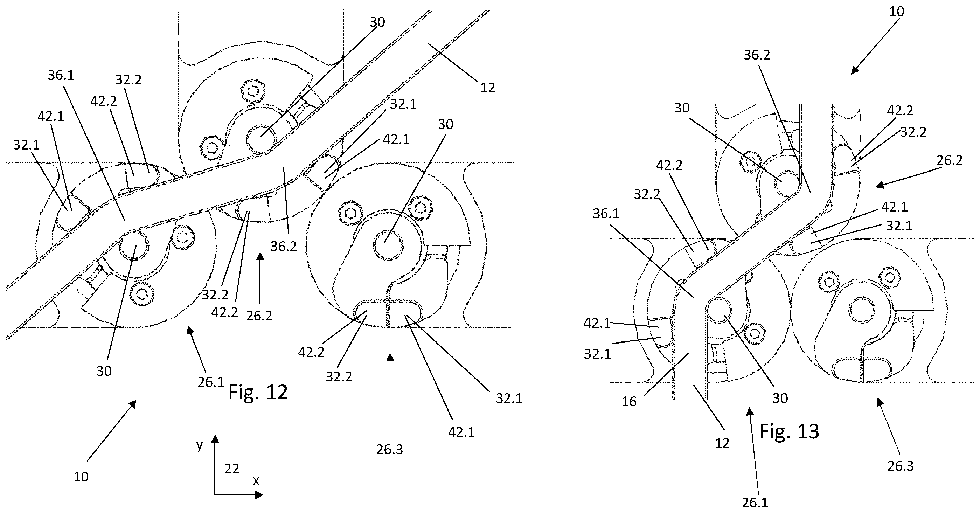

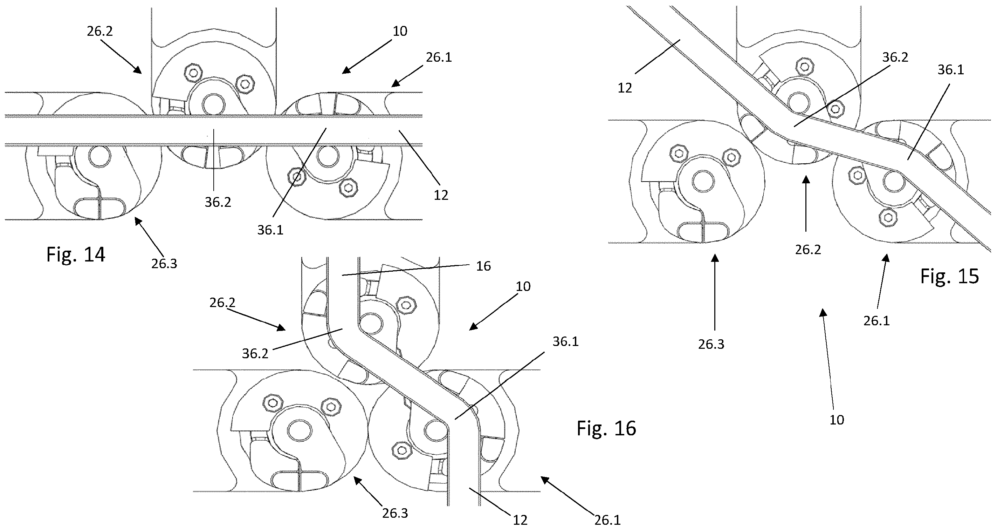

2D-Biegung: In das Ausgangsmaterial werden meist drei Biegungen (auch mehr Biegungen sind denkbar) an Biegebereichen 36.1, 36.2, 36.3 eingebracht, die den Leiter 12 - insbesondere Draht - in einen U-förmigen Pin - U-Pin 14 - mit einem Dachbereich 18 mit Dachspitze 20 umformen. Zum Formen von I-Pins 16 mit einer Kröpfung (siehe Fig. 13 und 16) werden zwei Biegungen an Biegebereichen 36.1, 36.2 durchgeführt. Alle Biegungen werden nur in einer Dimension, also z.B. in der X-Y-Ebene - im Folgenden Biegeebene 22 genannt - eingebracht, deshalb auch die Bezeichnung "2D-Biegung".

Sprung-Biegung: In den 2D umgeformten Pin 14, 16 wird meist im Dachbereich 20 eine Biegung eingebracht, die die beiden Schenkel 24.1, 24.2 des Pins 14, 16 um mindestens einen Layer versetzt. Layer sind die Positionen der Schenkel 24.1, 24.2 im beispielsweise als Stator ausgebildeten Bauteil. Beispiel: Wenn sich in einer Nut eines Stators also vier Pins befinden, hat der Stator vier Layer. D.h. dass der erste Schenkel 24.1 des betrachteten Pins 14, 16 sich in einem anderen Layer als der zweite Schenkel 24.2 des gleichen Pins 14, 16 befinden kann. Diese unterschiedliche Positionierung der beiden Schenkel 24.1, 24.2 eines Pins 14, 16 wird durch einen weiteren Umformschritt - Sprung-Biegung - meist im Bereich der Dachspitze 20 eines U-Pins 14 eingebracht. Die Richtung der Versetzung kann sich dabei von Pin zu Pin unterscheiden. Bei I-Pins 16 oder Layer-Pins wird meist auf diesen Umformschritt verzichtet, weil die Sprung-Biegung bei diesen Arten von Pins in vielen Fällen keine Vorteile bringt. Ausführungsbeispiele für Vorrichtungen und Verfahren zum Sprungbiegen sind in der DE 10 2018 106 978 A1 beschrieben und gezeigt, auf die für weitere Einzelheiten ausdrücklich verweisen wird.

3D-Biegung: In einem weiteren Umformschritt - 3D-Biegen - wird der Dachbereich 18 des U-Pins 14 bzw. des I-Pins 16 ("halbes" Dach) an die Rundung bzw. den Durchmesser der elektrischen Maschine angepasst. Der Durchmesser hängt dabei auch von der Position des jeweiligen Pins 14, 16 in der elektrischen Maschine ab (Layer des betrachteten Pins). Befindet sich der betrachtete Pin 14, 16 also weiter innen liegend, ist auch davon auszugehen, dass sein Durchmesser kleiner sein muss, als ein weiter außen liegender Pin 14, 16. Anders ausgedrückt: Pins 14, 16 eines weiter innenliegenden Layers haben eine geringere Rundung im Dachbereich 18, als Pins 14, 16 eines weiter außenliegenden Layers. Ausführungsbeispiele für Vorrichtungen und Verfahren zum 3D-Biegen sind in der DE 10 2018 108 656 A1 und in der deutschen Patentanmeldung 10 2019 134 785.8 beschrieben, auf die für weitere Einzelheiten ausdrücklich verwiesen wird.

Durch diese drei Umformschritte lassen sich sämtliche Pins 14, 16 einer elektrischen Maschine sehr nah zueinander anordnen bzw. in der elektrischen Maschine positionieren. Dies hat Einfluss auf die Effizienz der elektrischen Maschine und auch deren Größe (Bauraum).

Die im Folgenden näher erläuterten Ausführungsbeispiele von Biegevorrichtungen 10 und damit durchführbaren Biegeverfahren befassen sich ausschließlich mit dem hier zuerst aufgeführten Umformschritt des 2D-Biegens, also zum Beispiel der Herstellung der Dachgeometrie eines U-Pins 14 bzw. I-Pins 16. Die Biegevorrichtung 10 ist insbesondere derart ausgestaltet, dass sie ohne Umbaumaßnahmen an unterschiedliche Pinformen und Pindimensionen anpassbar ist und besonderes gut in die vorgenannte Prozesskette zum Herstellen eines Bauteils einer elektrischen Maschine einbindbar ist. Insbesondere sind die Parameter der gebogenen Pins bereits leicht durch Werte des Koordinatensystems abbildbar und die entsprechenden Daten sind leicht weiterverwendbar. Dennoch ist der Aufbau der Biegevorrichtung 10 relativ einfach.

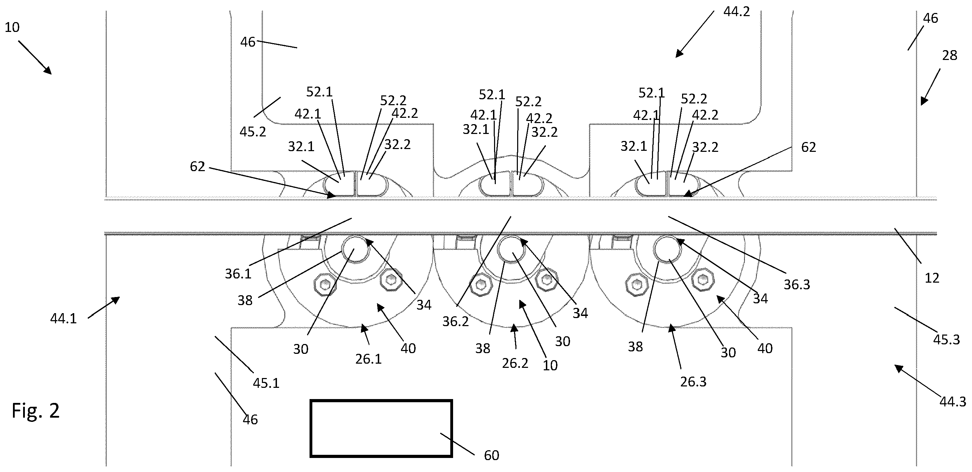

In den Fig. 2 bis 16 sind Ausführungsformen der Biegevorrichtung 10 in unterschiedlichen Stellungen zum Durchführen von Biegeverfahren zum Formen von U-Pins 14 und I-Pins 16 dargestellt.

Wie insbesondere in Fig. 2 dargestellt, weist die Biegevorrichtung 10 zum Formen eines Pins mit drei Biegebereichen 36.1, 36.2, 36.3 eine erste bis dritte Biegeeinheit 26.1, 26.2, 26.3 und eine Relativbewegungseinrichtung 28 zum Relativbewegen der ersten bis dritten Biegeeinheit 26.1, 26.2, 26.3 in oder parallel zu der Biegeebene 22 auf. Sollen mehr als drei Biegebereiche gebogen werden, kann die Biegevorrichtung 10 auch mehr als drei Biegeeinheiten aufweisen. Sollen nur zwei Biegebereiche geformt werden, ist auch eine Ausgestaltung mit nur einer ersten und einer zweiten Biegeeinheit 26.1, 26.2 möglich.

Bei den in den Fig. 2 bis 16 dargestellten Ausführungsformen sind die erste bis dritte Biegeeinheit 26.1, 26.2, 26.3 im Wesentlichen entsprechend zueinander oder auch identisch aufgebaut. Zum Erläutern des Aufbaus der Biegeeinheiten 26.1, 26.2, 26.3 der in den Fig. 2 bis 16 dargestellten Ausführungsform der Biegevorrichtung 10 ist die zweite Biegeeinheit 26.2 in Fig. 3 vergrößert dargestellt.

Wie aus Fig. 2 ersichtlich, weist jede Biegeeinheit 26.1, 26.2, 26.3 einen Formflächenkörper 30 und wenigstens ein Erfassungselement 32, 32.1, 32.2 auf. Bei den dargestellten Ausführungsformen weist jede Biegeeinheit 26.1, 26.2, 26.3 ein erstes und ein zweites Erfassungselement 32.1, 32.2 auf, es sind aber auch - nicht dargestellte - Ausführungsformen denkbar, bei dem nur zwei der Biegeeinheiten 26.1, 26.2, ein erstes und ein zweites Erfassungselement 32.1, 32.2 aufweisen, während eine vorzugsweise äußere dritte Biegeeinheiten 26.3 nur eines der Erfassungselemente 32.1, 32.2 aufweist und zwar vorzugsweise dasjenige Erfassungselement 32.1, 32.2, welches in der in Fig. 2 gezeigten Grundstellung weiter von der mittleren Biegeeinheit 26.2 entfernt angeordnet ist.

Der Formflächenkörper 30 erstreckt sich quer zu der Biegeebene 22 und weist eine als Formfläche 34 zum Formen eines der Biegebereich 36.1, 36.2, 36.3 des Leiters 12 ausgebildete Umfangsfläche 38 auf.

Die Umfangsfläche 38 erstreckt sich zumindest über einen Teil des Umfangs um den Formflächenkörper 30. Mehr insbesondere erstreckt sich die Umfangsfläche 38 vollständig um den Formflächenkörper 30 herum. Der Formflächenkörper 30 kann aus einem oder mehreren Teilen gebildet sein. Bei einer nicht dargestellten Ausführungsform ist der Formflächenkörper entlang wenigstens einer sich in z-Richtung erstreckenden Ebene geteilt. Bei nicht dargestellten Ausführungsformen können einzelne Teile des Formflächenkörpers 30 auch in unterschiedlichen Stellungen relativ zueinander positioniert werden, um unterschiedliche Ausgestaltungen der Biegung zu ermöglichen. Beispielsweise können ein erster Teil und ein zweiter Teil des entlang der in z-Richtung ausgerichteten Ebene geteilten Formflächenkörper in einer ersten Stellung aneinanderliegen und in einer zweiten Stellung senkrecht zu der Teilungsebene voneinander beabstandet positioniert sein. Für die Positionierung der Teile des Formflächenkörpers kann ein ansteuerbarer Stellaktor vorgesehen sein.

Insbesondere ist der Formflächenkörper 30 als ein von einer Basis 40 der Biegeeinheit 26.1, 26.2, 26.3 in z-Richtung vorstehender kreiszylinderförmiger Vorsprung ausgebildet. Es wären aber auch abweichende Formen und insbesondere von der Kreisform abweichende Krümmungen der Umfangsfläche 40 denkbar.

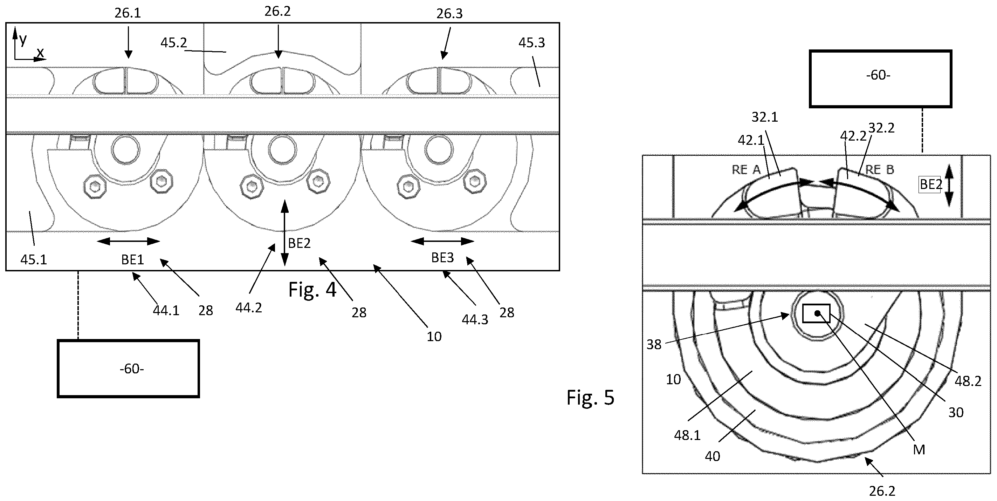

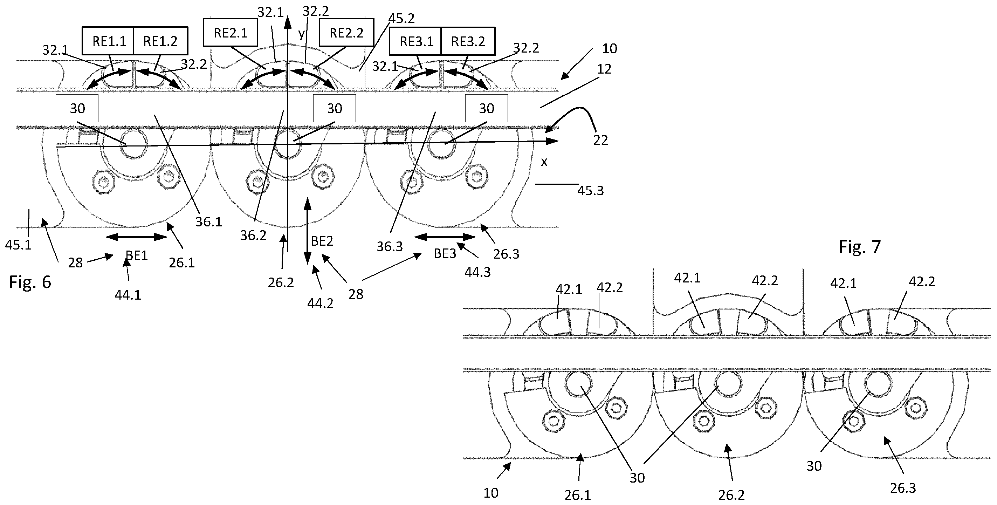

Wie aus den Fig. 5 und 6 ersichtlich, sind die Erfassungselemente 32.1, 32.2 jeweils entlang einer Bewegungsbahn RE A, RE B, RE1.1, RE1.2, RE2.1, RE2.2, RE3.1, RE3.2 um die Umfangsfläche 40 bewegbar und dienen zum Erfassen und/oder Umbiegen des Biegebereichs 36.1, 36.2, 36.3 um den Formflächenkörper 30.

Bei der in den Fig. 2 bis 16 dargestellten Ausführungsform der Biegevorrichtung 10 ist die Bewegungsbahn RE A, RE B, RE1.1, RE1.2, RE2.1, RE2.2, RE3.1, RE3.2 der Erfassungselemente 32.1, 32.2 um den Formflächenkörper 30 gekrümmt und erstreckt sich in einem Winkelbereich von mehr als 180°, insbesondere voll - um 360° - um den Formflächenkörper 30 herum. Insbesondere ist die Bewegungsbahn RE A, RE B, RE1.1, RE1.2, RE2.1, RE2.2, RE3.1, RE3.2, auf der das wenigstens eine Erfassungselement 32.1, 32.2 der jeweiligen Biegeeinheit bewegbar ist, ringförmig geschlossen um den Formflächenkörper geführt.

Die Bewegungsbahnen RE A, RE B, RE1.1, RE1.2, RE2.1, RE2.2, RE3.1, RE3.2 des ersten und des zweiten Erfassungselement sind vorzugsweise konzentrisch zueinander oder aufeinanderliegend ausgebildet. Sie sind so ausgebildet, dass das erste und das zweite Erfassungselement 32.1, 32.2 in einer Stellung, vorzugsweise einer Grundstellung, aneinanderliegen können und sich voneinander entfernen können. Somit lässt sich ein sehr breites Spektrum von Biegungen mit sehr gutem Biegeergebnis erreichen.

Bei der in den Fig. 2 bis 16 dargestellten Ausführungsform der Biegevorrichtung 10 sind die Erfassungselemente 32.1, 32.2 als Rotationselemente 42.1, 42.2 ausgebildet, die um den Mittelpunkt M der Umfangsfläche 40 herum drehbar sind, so dass die Bewegungsbahn RE A, RE B, RE1.1, RE1.2, RE2.1, RE2.2, RE3.1, RE3.2 jeweils eine hier z.B. kreisförmige Bewegungskurve ist. Die Bewegungskurve erstreckt sich insbesondere zumindest um einen Großteil des Winkelbereichs um den Formflächenkörper 30 herum und ist mehr insbesondere kreisringförmig geschlossen ausgebildet.

Im Folgenden wird ein möglicher Aufbau der Biegevorrichtung 10 anhand des ersten Ausführungsbeispiels unter Bezugnahme auf die Fig. 2 bis 6 näher erläutert.

Wie aus Fig. 2 ersichtlich weist die Relativbewegungseinrichtung 28 eine erste Bewegungseinrichtung 44.1 zum Bewegen der ersten Biegeeinheit 26.1, eine zweite Bewegungseinrichtung 44.2 zum Bewegen der zweiten Biegeeinheit 26.2 und eine dritte Bewegungseinrichtung 44.3 zum Bewegen der dritten Biegeeinheit 26.3 auf.

Die Bewegungseinrichtungen 44.1, 44.2, 44.3 weisen jeweils eine Bewegungseinheit 45.1, 45.2, 45.3, hier in Form eines linear bewegbaren Wagens oder Schlittens 46 und einen nicht gezeigten Linearaktor zum Antreiben einer linearen Bewegung der Bewegungseinheit 45.1, 45.2, 45.3 auf. Auf dem Wagen oder Schlitten 46 ist jeweils die Biegeeinheit 26.1, 26.2, 26.3 angeordnet. Insbesondere ist die Basis 40 auf dem Wagen oder Schlitten 46 befestigt.

An der Basis 40 steht, wie oben bereits beschrieben, der Formflächenkörper 30 als Biegeelement hervor. Weiter sind in der Basis 40 ein erster Ring 48.1 und ein zweiter Ring 48.2 konzentrisch mit dem Formflächenkörper 30 angeordnet und um die in z-Richtung gerichtete Mittelachse M des Formflächenkörpers 30 drehbar gelagert. An den Ringen 48.1, 48.2 stehen Ausleger 50.1, 50.2 vor. Die oberen Oberflächen der Basis 40, der Ringe 48.1, 48.2 und der Ausleger 50.1, 50.2 sind bündig zueinander und bilden eine Stützfläche, auf der der zu formende Leiter 12 von unten abgestützt werden kann. An dem Endbereich der Ausleger 50.1, 50.2 steht jeweils ein Biegefinger 52.1, 52.2 des jeweiligen Erfassungselements 32.1, 32.2 in z-Richtung hervor. An jedem Ring 48.1, 48.2 greift ein nicht dargestellter Rotationsaktor zum Antreiben einer Drehbewegung des jeweiligen Rings 48.1, 48.2 an.

Die Biegefinger 52.1, 52.2 bilden weitere Biegeelemente der Biegeeinheit 26.1, 26.2, 26.3 zum Biegen des Leiters 12. Sie sind spiegelsymmetrisch zueinander ausgebildet und weisen auf der dem Mittelpunkt M zugewandten Seite eine ebene Erfassungsfläche 54 auf, die an einem Endbereich in eine z.B. kreisförmig gekrümmte Erfassungsfläche 56 übergeht. Die gekrümmte Erfassungsfläche 56 bildet das von dem anderen Biegefinger 52.2, 52.1 weg in Umfangsrichtung gerichtete Ende des Biegefingers 52.1, 52.2. Die in Umfangsrichtung einander zu gerichteten Enden 58 der Biegefinger 52.1, 52.2 sind eben oder - bei nicht gezeigten weiteren Ausführungsformen - auch sonst wie komplementär ausgebildet, so dass die Biegefinger 52.1, 52.2 mit diesen als Anschlag wirkenden Enden 58 in der in Fig. 2 gezeigten Grundstellung dicht aneinander anliegen können.

Weiter weist die Biegevorrichtung 10 eine Steuerung 60 auf, die Aktoren der Biegevorrichtung 10, insbesondere die Linearaktoren und die Rotationsaktoren, jeweils einzeln gemäß einstellbarer Steuerparameter ansteuern kann. In der Steuerung 60 ist eine Software mit Steueranweisungen geladen, mittels denen die Biegevorrichtung 10 veranlasst wird, die nachfolgend noch erläuterten Biegeverfahren durchzuführen.

Die Biegevorrichtung 10 weist somit drei Bewegungseinheiten 45.1, 45.2, 45.3 auf, die sich relativ zueinander bewegen.

Auf jeder Bewegungseinheit 45.1, 45.2, 45.3 befindet sich eine Biegeeinheit 26.1, 26.2, 26.3. Die Biegeeinheiten 26.1, 26.2, 26.3 werden also mittels der jeweiligen Bewegungseinheit 45.1, 45.2, 45.3 relativ zueinander bewegt.

Die Biegeeinheit 26.1, 26.2, 26.3 weist bei der ersten Ausführungsform der Biegevorrichtung 10 den Formflächenkörper 30 als Biegeelement und zwei Rotationselemente 42.1, 42.2 auf.

Der Formflächenkörper 30 besitzt vorzugsweise eine runde Anlagefläche - Formfläche 34 - und hat einem Mittelpunkt M, der dem Mittelpunkt der Biegung entspricht. Um den Formflächenkörper 30 herum wird der z.B. als Draht ausgebildete Leiter 12 im Prozess ausgeformt.

Die beiden Rotationselemente 42.1, 42.2 können sich relativ zueinander bewegen. Vorzugsweise entspricht der Mittelpunkt der Drehbewegung RE A, RE B der beiden Rotationselemente 42.1, 42.2 dem Mittelpunkt M des Formflächenkörpers 30. Die Rotationselemente 42.1, 42.2 formen den Leiter 12 um den Formflächenkörper 30 herum aus. Die Rotationselemente 42.1, 42.2 haben dabei die Aufgabe, den Leiter 12 zu biegen und/oder den Leiter 12 gegenzuhalten, um ungewünschte Ausformungen des Leiters 12 zu vermeiden.

Der Abstand zwischen dem Formflächenkörper 30 und den Biegefingern 52.1, 52.2 der Rotationselemente 42.1, 42.2 entspricht der Breite des Leiters 12 (Drahtbreite) plus einem definierten Aufmaß, um den Leiter 12 prozesssicher zuzuführen.

Der Aufbau der Biegevorrichtung 10 ist dabei so, dass die Anzahl der Achsen (d.h. hier der Kombination aus Aktoren und der damit angetriebenen Einheiten oder Elemente zum jeweiligen Erreichen eines Bewegungsfreiheitsgrades der Biegevorrichtung) auf einem kleinen Bauraum untergebracht werden können. Dies wird bei der ersten Ausführungsform insbesondere durch die Anordnung aus Wagen/Schlitten 46 und der Ringe 48.1, 48.2 erreicht. Diese mehreren Achsen oder Aktoren sind zwar einzeln von der Steuerung 60 ansteuerbar, werden dabei aber so aufeinander abgestimmt, dass die folgenden Abläufe erzielt werden, um den gewünschten Pin zu erhalten. Dies ist durch entsprechende Software mit Einstellmöglichkeiten zur Eingabe der gewünschten Pin-Parameter erreichbar. Z.B. können die Koordinaten der Mittelpunkte der Biegebereiche 36.1, 36.2, 36.3 wie in Fig. 1 verdeutlicht, eingegeben werden.

Es wird nun auf Fig. 4 bis 6 Bezug genommen, um die durch die Linearaktoren angetriebenen Bewegungen BE1, BE2, BE3 der Bewegungseinheiten 26.1, 26.2, 26.3 zu veranschaulichen. Wie ersichtlich ist die z.B. als Wagen oder Schlitten 46 ausgebildete erste Bewegungseinheit 45.1 dazu ausgebildet, die erste Biegeeinheit 26.1 in der x-Richtung hin- und her zu bewegen; die Bewegung der ersten Biegeeinheit 26.1 ist in den Figuren als BE1 gekennzeichnet. Die ebenfalls als Wagen oder Schlitten 46 ausgebildete zweite Bewegungseinheit 45.2 ist dazu ausgebildet, die zweite Biegeeinheit 26.2 in der y-Richtung hin- und her zu bewegen; die Bewegung der zweiten Biegeeinheit 26.2 ist in den Figuren als BE2 gekennzeichnet. Die ebenfalls als Wagen oder Schlitten 46 ausgebildete dritte Bewegungseinheit 45.3 ist dazu ausgebildet, die dritte Biegeeinheit 26.3 in der x-Richtung hin- und her zu bewegen; die Bewegung der dritten Biegeeinheit 26.3 ist in den Figuren als BE3 gekennzeichnet. Diese Bewegungen BE1, BE2, BE3 sind durch die Steuerung 60 gesteuert.

Wie Fig. 4 zeigt, bewegen sich die erste und dritte Bewegungseinheit 45.1, 45.3 parallel zueinander und bevorzugt unabhängig voneinander (X-Bewegung), während sich die zweite Bewegungseinheit 45.3 rechtwinklig dazu bewegen kann (Y-Bewegung).

Fig. 5 zeigt, wie die Drehbewegungen RE A des hier als erstes Rotationselement 42.1 ausgebildeten ersten Erfassungselements 32.1 und RE B des hier als zweites Rotationselement 42.2 ausgebildeten zweiten Erfassungselement 32.2 durch die Steuerung 60 angesteuert werden. In Fig. 6 sind die durch die Steuerung 60 ansteuerbaren Bewegungen der Biegeeinheiten (BE) 26.1, 26.2 und der Rotationselemente (RE) 42.1, 42.2 anhand entsprechender Bewegungsbahnen BE1, BE2, BE3, RE1.1, RE1.2, RE2.1, RE2.2, RE3.1 und RE3.2 im Überblick gezeigt.

Betrachtet man Fig. 6, so lässt sich das Zusammenspiel aus Bewegungseinheiten 45.1, 45.2, 45.3 und Biegeeinheiten 26.1, 26.2, 26.3 mit Rotationselementen 42.1, 42.2 näher beschreiben. Die erste und die dritte Bewegungseinheit 45.1, 45.3 können sich in X-Richtung bewegen, während die zweite Bewegungseinheit 45.2 sich in Y-Richtung verfahren lässt. Synchron lassen sich alle Rotationselemente 42.1, 42.2 der jeweiligen Biegeeinheiten 26.1, 26.2, 26.3 um den jeweiligen Formflächenkörper 30 herum bewegen.

Gleichzeitig zeigt Fig. 6 auch die in Fig. 2 dargestellte Grundstellung zum Durchführen eines ersten Schritts eines Biegeverfahrens zum zweidimensionalen Biegen des Leiters 12 in der hier durch die x-y-Ebene abgebildeten Biegeebene 22 in eine U-Form, um so den U-Pin 14, 14.1, 14.2 zu bilden. Dieses Biegeverfahren zum Formen des U-Pins 14, 14.1, 14.2 wird im Folgenden anhand der Darstellungen der Fig. 2, 3, 6-9 erläutert.

In der in Fig. 2 und 6 gezeigten Grundstellung sind die Biegeeinheiten 26.1, 26.2, 26.3 zueinander in x-Richtung ausgerichtet. Insbesondere liegen die Mittelpunkte M der Umfangsflächen 40 der Biegeeinheiten 26.1, 26.2, 26.3 auf einer Linie, insbesondere der x-Linie (y=0). Der Mittelpunkt M der mittleren Biegeeinheit 26.2 in der Grundstellung bildet den Nullpunkt des Koordinatensystems (x=0, y=0).

In der in Fig. 2 und 6 gezeigten Grundstellung liegen das erste und das zweite Erfassungselement 32.1, 32.2 der jeweiligen Biegeeinheit 26.1, 26.2, 26.3 nahe beieinander und liegen vorzugsweise aneinander an.

Die Erfassungselemente 32.1, 32.2 sind alle auf einer Seite der Biegeeinheiten 26.1, 26.2, 26.3, so dass zwischen allen Erfassungselementen 32.1, 32.2 der Biegeeinheiten 26.1, 26.2, 26.3 auf der einen Seite und den Formflächenkörpern 30 der Biegeeinheiten 26.1, 26.2, 26.3 auf der anderen Seite ein sich in x-Richtung erstreckender Aufnahmekanal 62 gebildet ist. Die zweite Biegeeinheit 26.2 bildet die mittlere Biegeeinheit, die zwischen der ersten und der zweiten Biegeeinheit 26.1, 26.3 aufgenommen ist. Die erste und die zweite Biegeeinheit 26.1, 26.3 bilden die äußeren Biegeeinheiten, wobei unerheblich ist, welche der äußeren Biegeeinheiten als erste und welche als dritte Biegeeinheit bezeichnet wird.

Insbesondere befinden sich bei der ersten bis dritten Biegeeinheit 26.1, 26.2, 26.3 jeweils das erste und das zweite Rotationselement 42.1, 42.2 in der Grundstellung auf 12 Uhr in Bezug auf den Formflächenkörper 30.

Ein erster Schritt des Biegeverfahrens umfasst: Einführen eines Drahtabschnittes als zu biegender Leiter 12 mittels einer nicht dargestellten Zuführeinheit. Die äußeren Bewegungseinheiten 45.1, 45.3 befinden sich bereits auf der richtigen X-Position: der Abstand zwischen den äußeren Biegeeinheiten 26.1, 26.3 zueinander definiert die Schenkellängen am späteren Hairpin. Entsprechend wird die X-Position definiert.

In einem optionalen zweiten Schritt des Biegeverfahrens steuert die Steuerung 60 die Rotationsaktoren derart an, dass die Rotationselemente 42.1, 42.2 der Biegeeinheiten 26.1, 26.2, 26.3 in entgegengesetzten Drehrichtungen voneinander weg gedreht werden, bis die Biegefinger 52.1, 52.2 den Leiter 12 erfassen und fixieren. Diese Stellung ist in den Fig. 3 und 7 dargestellt. In diesem optionalen zweiten Schritt (dieser Schritt ist nicht unbedingt relevant) kann der Drahtabschnitt in der Biegevorrichtung 10 durch Anstellen der Rotationelemente 32.1, 32.2 (Drehbewegung) fixiert werden und somit von der Zuführeinheit übernommen werden, ohne dass der Drahtabschnitt seine Position verliert.

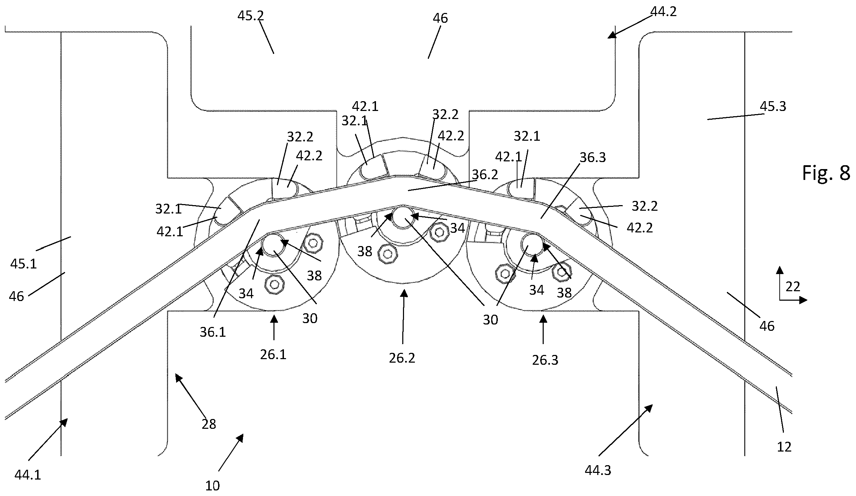

Anschließend wird, wie dies in Fig. 8 gezeigt ist, die zweite Biegeeinheit 26.2 auf der y-Achse von der x-Achse, auf der sich die erste und dritte Biegeeinheit 26.1, 26.3 bewegen, weg bewegt. Die erste und die dritte Biegeeinheit 26.1, 26.3 werden auf der x-Achse in x-Richtung aufeinander zu bewegt. Dadurch werden die Biegebereiche 36.1, 36.2, 36.3 an den Formflächen 34 geformt. Die Rotationselemente 42.1, 42.2 werden derart nachgeführt, dass sie den Leiter 12 weiterhin fixieren und/oder umformen.

Insbesondere wird die zweite Biegeeinheit 26.2 in die Richtung bewegt, in die die Seite des Leiters 12 zeigt, an der die Erfassungselemente 32.1, 32.2 angreifen. Weiter werden das erste und das zweite Erfassungselement 32.1, 32.2 der mittleren zweiten Biegeeinheit 26.2 in entgegengesetzte Richtungen voneinander weg gedreht, so dass sie das Umformen der Dachspitze 20 an dem zweiten Biegebereich 36.2 unterstützen. Die Erfassungselemente 32.1, 32.2 der ersten Biegeeinheit 26.1 werden in die eine Richtung gedreht, um den ersten Schenkel 24.1 und den Bereich des Leiters 12 zwischen dem ersten und dem zweiten Biegebereich 36.1, 36.2 zu stützen und zu führen und eventuell den ersten Biegebereich 36.1 um die Formfläche 34 der ersten Biegeeinheit 26.1 herum zu formen. Die Bewegung der Erfassungselemente 32.1, 32.2 der dritten Biegeeinheit 26.3 erfolgt spiegelbildlich zu der Bewegung der Erfassungselemente 32.1, 32.2 der ersten Biegeeinheit 26.1.

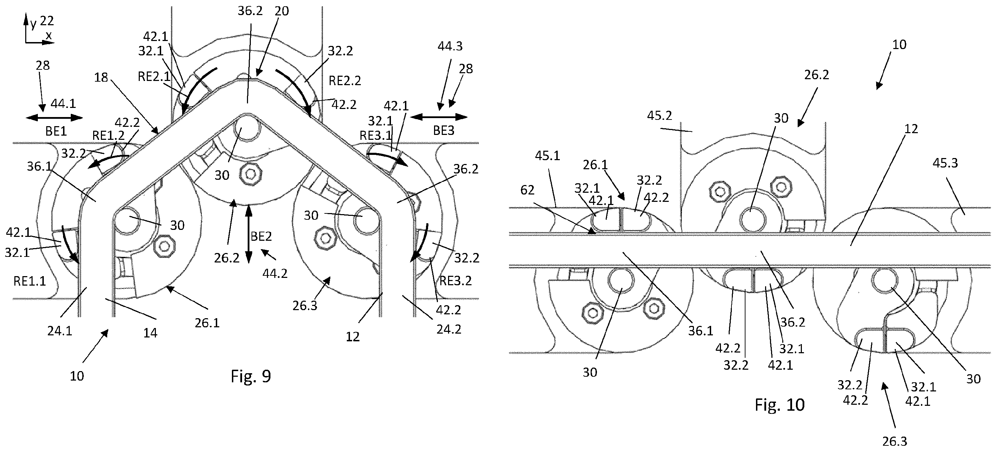

Diese zuvor anhand von Fig. 8 erläuterten Bewegungen werden fortgeführt, bis die in Fig. 9 gezeigte Endstellung erreicht ist, in der der Leiter 12 fertig zu dem U-Pin 14 gebogen wird.

Bei einem konkreten Ausführungsbeispiel des Biegeverfahrens werden in dem dritten Schritt - Umformschritt - gemäß den Fig. 8 und 9 die folgenden Bewegungen durchgeführt. Alle folgenden Bewegungen sind aufeinander abgestimmt und verlaufen vorzugsweise zeitgleich:
Umformschritt vom Drahtabschnitt zum U-Pin:
- die erste Bewegungseinheit 45.1 fährt in positive X-Richtung
- das erste Rotationselement 42.1 der ersten Biegeeinheit 26.1 fährt gegen den Uhrzeigersinn - voreilend im Vergleich zu dem zweiten Rotationselement 42.2 der ersten Biegeeinheit - um den Formflächenkörper 30 der ersten Biegeeinheit 26.1
- das zweite Rotationselement 42.2 der ersten Biegeeinheit 26.2 fährt gegen den Uhrzeigersinn - nacheilend im Vergleich zu dem ersten Rotationselement 42.1 der ersten Biegeeinheit 26.1 - um den Formflächenkörper 30 der ersten Biegeeinheit 26.1
- die zweite Bewegungseinheit 45.2 fährt in positive Y-Richtung
- das erste Rotationselement 42.1 der zweiten Biegeeinheit 26.2 fährt gegen den Uhrzeigersinn um den Formflächenkörper 30 der zweiten Biegeeinheit 26.2
- das zweite Rotationselement 42.2 der zweiten Biegeeinheit 26.2 fährt im Uhrzeigersinn um den Formflächenkörper 30 der zweiten Biegeeinheit 26.2
- die dritte Bewegungseinheit 45.3 fährt in negative X-Richtung
- das erste Rotationselement 42.1 der dritten Biegeeinheit 26.3 fährt im Uhrzeigersinn - nacheilend im Vergleich zu dem zweiten Rotationselement 42.2 der dritten Biegeeinheit 26.3 - um den Formflächenkörper 30 der dritten Biegeeinheit 26.3
- das zweite Rotationselement 42.2 der dritten Biegeeinheit 26.3 fährt im Uhrzeigersinn - voreilend im Vergleich zu dem ersten Rotationselement 42.1 der dritten Biegeeinheit 26.3 - um den Formflächenkörper 30 der dritten Biegeeinheit 26.3.

Anschließend an die in Fig. 9 gezeigte Situation werden folgende Schritte durchgeführt:
- Entnehmen des fertig gebogenen Pins
- Alle Achsen fahren auf Grundstellung (unterscheidet sich zwischen U-Pin und I-Pin)
- Nächster Drahtabschnitt kann eingeführt werden.

Jede Biegeeinheit 26.1, 26.2, 26.3 für sich stellt im Prinzip eine Rotationszugbiegeeinheit dar, wobei aber bei der vorliegenden Ausführungsform der Biegevorrichtung 10 je wenigstens zwei Rotationselemente 42.1, 42.2 pro Biegeeinheit 26.1, 26.2, 26.3 vorgesehen sind. Die möglichen Funktionen des zweiten Rotationselements 42.1, 42.2 werden im Folgenden erläutert:

### Umformen des Leiters

Insbesondere bei der zweiten Biegeeinheit 26.2 dient das zweite Rotationselement 42.2 in Zusammenwirken mit dem ersten Rotationselement 42.1 dazu, den Leiter 12 ausgehend von der Grundstellung gleichzeitig zu beiden Seiten um den Formflächenkörper 30 herum zu formen. In diesem Fall bewegen sich das erste und das zweite Rotationselement 42.1, 42.2 wie durch RE2.1 und RE2.2 in Fig. 9 angedeutet in entgegengesetzte Richtungen und formen dadurch den Leiter 12, um den entsprechenden Formflächenkörper 30 herum aus. Die zweite Bewegungseinheit 45.2 kompensiert diese Biegung durch eine Bewegung in positive Y-Richtung.
und/oder

### Gegenhalten:

Insbesondere bei der ersten und dritten Biegeeinheit 26.1, 26.3 kann das weitere Rotationselement 42.2, 42.1 als Gegenhalter dienen. In diesem Fall bewegen sich das erste und das zweite Rotationselement 42.1, 42.2 wie durch RE1.1, RE1.2, RE3.1 und RE3.2 in Fig. 9 angedeutet in dieselbe Richtung jedoch mit unterschiedlicher Geschwindigkeit. Dabei formt eines der beiden Rotationselemente 42.1, 42.2 die Biegung um den Formflächenkörper 30 herum aus, während das andere der Rotationselemente 42.1, 42.2 eine Drehbewegung in dieselbe Richtung, aber mit verlangsamter Geschwindigkeit vollzieht. Das jeweils nacheilende Rotationselement - die sind im Beispiel von Fig. 9 das zweite Rotationselement 42.2(26.1) der ersten Biegeeinheit 26.1 und das erste Rotationselement 42.1(26.3) der dritten Biegeeinheit 26.3 - hat dabei zum einen die Aufgabe, einer ungewollten Ausformung des Leiters 12 infolge der Biegung des voreilenden Rotationselementes 42.1(26.1), 42.2(26.3) entgegenzuwirken (Funktion als Gegenhalter) und zum anderen die Bewegungen der Bewegungseinheiten 45.1, 45.3 zu kompensieren.

Wie leicht aus den Fig. 2 bis 16 ersichtlich können bei dieser Biegevorrichtung 10 und dem Biegeverfahren die Lage der Biegebereiche 36.1, 36.2, 36.3 und das Ausmaß des Biegens und somit die Parameter des Dachbereichs 18 leicht durch Parameteranpassung der Bewegungen in der Steuerung 60 geändert werden, so dass sowohl der kleinere U-Pin 14.1 als auch der größere U-Pin 14.2 auf der gleichen Biegevorrichtung 10 ohne Umbaumaßnahmen geformt werden kann. Die Steuerung 60 steuert hierzu die einzelnen Aktoren der Biegevorrichtung 10 einzeln, aber gemäß einem entsprechend den Biegeparametern vorgegebenen Ablaufplan an, um das vorgenannte Biegeverfahren durchzuführen.

Zum Entnehmen können nach dem gemäß Fig. 9 erfolgten Biegen der Biegebereiche 36.1, 36.2, 36.3, wobei auch mittels der Biegeelemente - Formflächenkörper 30 und Erfassungselemente 32.1, 32.2 - ein gewisses Überbiegen erfolgen kann, um einer Rückbiegung vorzubeugen, die Bewegungseinheiten 45.1, 45.2, 45.3 etwas in ihre andere Bewegungsrichtung gefahren und die Erfassungselemente 32.1, 32.,2 etwas von dem Leiter 12 weg gefahren werden. Anschließend wird die Biegevorrichtung 10 wieder in die in Fig. 2 und 6 gezeigte Grundstellung gefahren, um den nächsten zu biegenden Leiter 12 aufzunehmen. Somit kann ein Biegen mehrerer Leiter 12 nacheinander in sehr schneller Taktung erfolgen.

Mit der gleichen Biegevorrichtung 10 kann jedoch anstelle eines U-Pins 14, 14.1, 14.2 auch ein I-Pin 16 geformt werden. Ein beispielhaftes Biegeverfahren zum Biegen eines I-Pins wird im Folgenden anhand der Fig. 10 bis 13 erläutert.

Fig. 10 zeigt die Grundstellung. Bei einem I-Pin 16 sind nur ein erster und ein zweiter Biegebereich 36.1, 36.2 zu biegen. Daher werden nur die erste und die zweite Biegeeinheit 26.1, 26.2 benötigt. Hierzu werden die Erfassungselemente 32.1, 32.2 der dritten Biegeeinheit 26.3 vor dem Einfügen des Leiters 12 auf diejenige Hälfte oder Seite der dritten Biegeeinheit 26.3 bewegt, auf der der Leiter 12 nicht zu liegen kommt. Die Erfassungselemente 32.1, 32.2 der ersten Biegeeinheit 26.1 werden in ihre Grundstellung verfahren, in der sie, zum Beispiel aneinander anliegend, zwischen sich und dem Formflächenkörper 40 den Aufnahmekanal 62 zum Einführen des noch geraden Leiters 12 bilden. Dabei liegt der Formflächenkörper 30 der ersten Biegeeinheit 26.1 auf einer ersten Seite - hier die in negative y-Richtung gerichtete Seite - des Leiters 12 und die Biegefinger 52.1, 52.2 der Erfassungselemente 32.1, 32.2 der ersten Biegeeinheit 26.1 liegen auf der zweiten Seite - hier die in positive y-Richtung gerichtete Seite. Die zweite Biegeeinheit 26.2 wird zum Einnehmen der in Fig. 10 gestellten Grundstellung vor dem Einführen des Leiters 12 soweit in y-Richtung verfahren, dass ihr Formflächenkörper auf der zweiten Seite des Leiters 12 zu liegen kommt, und die Erfassungselemente 32.1, 32.2 der zweiten Biegeeinheit 26.2 werden so weit verfahren, dass sie auf der ersten Seite des Leiters 12 zu liegen kommen. Mit anderen Worten greifen die Formflächenkörper 30 der Biegeeinheiten 26.1, 26.2 auf unterschiedlichen Seiten des Leiters 12 an, und die Erfassungselemente 32.1, 32.2 der Biegeeinheiten 26.1, 26.2 greifen auf unterschiedlichen Seiten des Leiters 12 an.

Demnach lassen sich auf derselben Biegevorrichtung 10 auch I-Pins 16 herstellen. Hierzu unterscheidet sich die Grundstellung der beteiligten Achsen geringfügig zu der Herstellung von U-Pins.

Konkretes Beispiel der Grundstellung für I-Pin:
Die erste Biegeeinheit 26.1 befindet sich in gleicher Grundstellung wie bei der Umformung von U-Pins 14: die Rotationselemente 42.1 und 42.2 stehen auf 12 Uhr in Bezug auf den Formflächenkörper 30.

Bei der zweiten Biegeeinheit 26.2 verfahren die Rotationselemente 42.1 und 42.2 vor dem Einführen des Drahtes als zu biegender Leiter 12 um 180° auf 18Uhr in Bezug auf den Formflächenkörper 30 - gleichzeitig verfährt die zweite Bewegungseinheit 45.2 in die positive Y-Richtung, so dass der Leiter 12 zwischen den Rotationselementen 42.1, 42.2 und Formflächenkörper 30 eingeführt werden kann.

Die dritte Biegeeinheit 26.3 wird für I-Pins 16 nicht zur Umformung benötigt, deshalb fahren deren Rotationselemente 42.1, 42.2 um 180° auf 18Uhr in Bezug auf den Formflächenkörper 30.

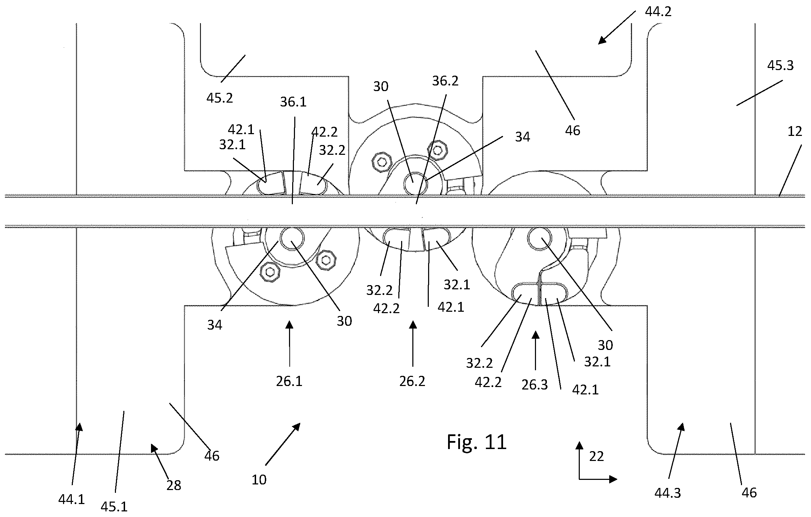

Nach dem Einführen des Leiters 12 ergibt sich die in Fig. 10 gezeigte Situation. Anschließend werden die Erfassungselemente 32.1, 32.2 der bei dem Biegeverfahren des I-Pins beteiligten Biegeeinheiten 26.1, 26.2 auf den Leiter 12 zu verfahren, um diesen gegen die Formflächenkörper 30 zu drücken und so zu fixieren. Dies ist in Fig. 11 gezeigt. Wie die Fig. 12 und 13 zeigen, wird dann die zweite Biegeeinheit 26.2 in positive y-Richtung bewegt, und die erste Biegeeinheit 26.1 wird auf die zweite Biegeeinheit 26.2 in x-Richtung zu bewegt - hier positive x-Richtung. Dadurch erfolgt ein Verbiegen des Leiters 12. Die Erfassungselemente 32.1, 32.2 werden nachgefahren, um den Leiter 12 weiter zu fixieren und/oder ein Umformen desselben durchzuführen oder zu unterstützen.

Fig. 13 zeigt die Endstellung mit dem fertig gebogenen Leiter 12. Nach einer optionalen Lockerung der Biegeelemente 40, 32.1, 32.2 durch entsprechendes Zurückfahren kann der I-Pin 16 entnommen werden, und die Biegevorrichtung 10 fährt zur Aufnahme des nächsten Leiters 12 in die in Fig. 12 gezeigte Grundstellung zurück.

Bei einem konkreten Ausführungsbeispiel für das Biegeverfahren zum Formen des I-Pins erfolgt folgender Ablauf:
In einem ersten Schritt erfolgt ein Einführen des Drahtabschnittes als zu biegender Leiter mittels einer nicht dargestellten Zuführeinheit. Die erste Bewegungseinheit befindet sich bereits auf der richtigen X-Position. Der Abstand zwischen den Biegeeinheiten 26.1, 26.2 zueinander, definiert die Schenkellängen am späteren Pin 16. Entsprechend ist die X-Position definiert. Die sich dadurch ergebende Position ist in Fig. 10 dargestellt.

In dem optionalen zweiten Schritt kann durch Anstellen der Rotationelemente 42.1, 42.2 (Drehbewegung) der Drahtabschnitt in der Biegevorrichtung 10 fixiert werden und somit von der Zuführeinheit übernommen werden, ohne dass er seine Position verliert. Die sich dann ergebende Situation ist in den Fig. 10 und 14 dargestellt.

In einem dritten Schritt erfolgt das Umformen. Alle folgenden anhand der Fig. 12 und 13 erläuterten Bewegungen sind aufeinander abgestimmt und verlaufen vorzugsweise zeitgleich:
Umformschritt vom Drahtabschnitt zum I-Pin
- die erste Bewegungseinheit 45.1 fährt in positive X-Richtung
- das erste Rotationselement 42.1 der ersten Biegeeinheit 26.1 fährt gegen den Uhrzeigersinn - voreilend im Vergleich zum zweiten Rotationselement 42.2 der ersten Biegeeinheit 26.1 um den Formflächenkörper 30 der ersten Biegeeinheit 26.1
- das zweite Rotationselement 42.1 der ersten Biegeeinheit 26.1 fährt gegen den Uhrzeigersinn - nacheilend im Vergleich zu dem ersten Rotationselement 42.2 der ersten Biegeeinheit 26.2 um den Formflächenkörper 30 der ersten Biegeeinheit 26.1
- die zweite Bewegungseinheit 45.2 fährt in positive Y-Richtung
- das erste Rotationselement der zweiten Biegeeinheit 26.2 fährt gegen den Uhrzeigersinn - voreilend im Vergleich zu dem zweiten Rotationselement 42.2 der zweiten Biegeeinheit 26.2 um den Formflächenkörper 30 der zweiten Biegeeinheit 26.2
- das zweite Rotationselement 42.2 der zweiten Biegeeinheit 26.2 fährt gegen den Uhrzeigersinn - nacheilend im Vergleich zu dem ersten Rotationselement 42.1 der zweiten Biegeeinheit 26.2 -um den Formflächenkörper 30 der zweiten Biegeeinheit 26.2
- die dritte Bewegungseinheit 45.3 ist inaktiv
- das erste Rotationselement 42.1 der dritten Biegeeinheit 26.3 ist inaktiv
- das zweite Rotationselement 42.2 der dritten Biegeeinheit 26.3 ist inaktiv.

In einem vierten Schritt erfolgt das Entnehmen des fertig gebogenen I-Pins 16. Danach fahren alle Achsen auf Grundstellung - diese unterscheidet sich zwischen U- und I-Pin. Dann kann der nächster Drahtabschnitt eingeführt werden.

Es können nacheinander U-Pins und I-Pins in einem fortlaufenden Prozess geformt werden.

Bei dem in Fig. 10 bis 13 gezeigten Biegeverfahren zum Biegen des I-Pins 16 wird die links in den Fig. gezeigte äußere Biegeeinheit und die mittlere Biegeeinheit benutzt. Wie die Fig. 14 bis 16 zeigen kann das Biegeverfahren natürlich auch mit der mittleren und der rechten Biegeeinheit durchgeführt werden. In diesem Fall wirkt die rechte Biegeeinheit als erste Biegeeinheit 26.1 verwendet, die hier in die negative x-Richtung zum Biegen verfahren wird, sonst ist alles analog wie zuvor anhand der Fig. 10 bis 13 beschrieben.

Außerdem ist klar, dass dann, wenn lediglich I-Pins 16 anzufertigen sind, auch eine Ausführungsform der Biegevorrichtung 10 verwendet werden kann, die nur die erste (linke oder rechte äußere) Biegeeinheit 26.1 und die zweite Biegeeinheit 26.2 aufweist.

Um ein Biegeverfahren zum 2D-Biegen im Zuge der Herstellung eines Bauteils einer elektrischen Maschine mit geringem maschinellem Aufwand möglichst schonend, mit hoher Taktrate und dennoch flexibel durchführen zu können, ist eine Biegevorrichtung (10) zum zweidimensionalen, in oder parallel zu einer Biegeebene (22) durchzuführenden Biegen eines elektrischen Leiters (12) beschrieben worden, die wenigstens eine Biegeeinheit (26.1, 26.2, 26.3) pro Biegebereich (36.1, 36.2, 36.3) des Leiters (12) aufweist, die vorzugsweise einzeln ansteuerbar relativ zueinander bewegbar sind und vorzugsweise ebenfalls einzeln ansteuerbare, auf einer Bewegungsbahn (RE1.2, RE2.2; RE2.1, RE2.2; RE3.1, RE3.2) bewegbare Erfassungselemente (32.1, 32.2) zum Umbiegen um eine Formfläche (34) und/oder Gegenhalten des Leiters (12) beim Umbiegen um die Formfläche (34) aufweisen. Außerdem sind mit einer solchen Biegevorrichtung (10) durchführbare Biegeverfahren zum 2D-Biegen von U-förmigen und I-förmigen Leitern (12) beschrieben worden.

### Bezugszeichenliste:

- 10: Biegevorrichtung
- 12: Leiter
- 14: U-Pin
- 14.1: kleinerer U-Pin
- 14.2: größerer U-Pin
- 16: I-Pin
- 18: Dachbereich
- 20: Dachspitze
- 22: Biegeebene (X-Y-Ebene)
- 24.1: erster Schenkel
- 24.2: zweiter Schenkel
- 26.1: erste Biegeeinheit
- 26.2: zweite Biegeeinheit
- 26.3: dritte Biegeeinheit
- 28: Relativbewegungseinrichtung
- 30: Formflächenkörper
- 32.1: erstes Erfassungselement
- 32.2: zweites Erfassungselement
- 34: Formfläche
- 36.1: erster Biegebereich (durch erste Biegeeinheit zu formen)
- 36.2: zweiter Biegebereich (durch zweite Biegeeinheit zu formen)
- 36.3: dritter Biegebereich (durch dritte Biegeeinheit zu formen)
- 38: Umfangsfläche
- 40: Basis der Biegeeinheit
- 42.1: erstes Rotationselement
- 42.2: zweites Rotationselement
- 44.1: erste Bewegungseinrichtung
- 44.2: zweite Bewegungseinrichtung
- 44.3: dritte Bewegungseinrichtung
- 45.1: erste Bewegungseinheit
- 45.2: zweite Bewegungseinheit
- 45.3: dritte Bewegungseinheit
- 46: Schlitten
- 48.1: erster Ring
- 48.2: zweiter Ring
- 50.1: erster Ausleger
- 50.2: zweiter Ausleger
- 52.1: erster Biegefinger
- 52.2: zweiter Biegefinger
- 54: ebene Erfassungsfläche
- 56: gekrümmte Erfassungsfläche
- 58: Ende (Anschlag)
- 60: Steuerung
- 62: Aufnahmekanal
- M: Mittelpunkt Umfangsfläche
- BE1: Bewegung erste Biegeeinheit
- BE2: Bewegung zweite Biegeeinheit
- BE3: Bewegung dritte Biegeeinheit
- RE A: Bewegungsbahn erstes Erfassungselement
- RE B: Bewegungsbahn zweites Erfassungselement
- RE1.1: Bewegungsbahn erstes Erfassungselement der ersten Biegeeinheit
- RE1.2: Bewegungsbahn zweites Erfassungselement der ersten Biegeeinheit
- RE2.1: Bewegungsbahn erstes Erfassungselement der zweiten Biegeeinheit
- RE2.2: Bewegungsbahn zweites Erfassungselement der zweiten Biegeeinheit
- RE3.1: Bewegungsbahn erstes Erfassungselement der dritten Biegeeinheit
- RE3.2: Bewegungsbahn zweites Erfassungselement der dritten Biegeeinheit
- 56: gekrümmte Erfassungsfläche
- 58: Ende (Anschlag)
- 60: Steuerung
- 62: Aufnahmekanal
- M: Mittelpunkt Umfangsfläche
- BE1: Bewegung erste Biegeeinheit
- BE2: Bewegung zweite Biegeeinheit
- BE3: Bewegung dritte Biegeeinheit
- RE A: Bewegungsbahn erstes Erfassungselement
- RE B: Bewegungsbahn zweites Erfassungselement
- RE1.1: Bewegungsbahn erstes Erfassungselement der ersten Biegeeinheit
- RE1.2: Bewegungsbahn zweites Erfassungselement der ersten Biegeeinheit
- RE2.1: Bewegungsbahn erstes Erfassungselement der zweiten Biegeeinheit
- RE2.2: Bewegungsbahn zweites Erfassungselement der zweiten Biegeeinheit
- RE3.1: Bewegungsbahn erstes Erfassungselement der dritten Biegeeinheit
- RE3.2: Bewegungsbahn zweites Erfassungselement der dritten Biegeeinheit

## Patentansprüche

1. Biegevorrichtung (10) zum zweidimensionalen, in einer Biegeebene (22) oder parallel zu einer Biegeebene (22) durchzuführenden Biegen eines elektrischen Leiters (12), umfassend eine erste Biegeeinheit (26.1) und eine zweite Biegeeinheit (26.2), wobei die erste Biegeeinheit (26.1) einen sich quer zu der Biegeebene (22) erstreckenden Formflächenkörper (30) mit einer als Formfläche (34) zum Formen eines ersten Biegebereichs (36.1) des elektrischen Leiters (12) ausgebildeten Umfangsfläche (38) aufweist und die zweite Biegeeinheit (26.2) einen sich quer zu der Biegeebene (22) erstreckenden Formflächenkörper (30) mit einer als Formfläche (34) zum Formen eines zweiten Biegebereichs (36.2) des elektrischen Leiters (12) ausgebildeten Umfangsfläche (38) aufweist, **gekennzeichnet durch** eine Relativbewegungseinrichtung (28) zum Relativbewegen der ersten Biegeeinheit (26.1) und der zweiten Biegeeinheit (26.1, 26.2) zueinander in der Biegeebene (22) oder parallel zu der Biegeebene (22),
wobei die erste Biegeeinheit (26.1) ein erstes Erfassungselement (32.1) und ein zweites Erfassungselement (32.2) aufweist und die zweite Biegeeinheit (26.2) ein erstes Erfassungselement (32.1) und ein zweites Erfassungselement (32.2) aufweist,
wobei das erste Erfassungselement (32.1) und das zweite Erfassungselement (32.2) der ersten Biegeeinheit (26.1) relativ zueinander beweglich sind und jeweils entlang einer Bewegungsbahn (RE A, RE B; RE1.1, RE1.2), die eine um die Umfangsfläche (38) des Formflächenkörpers (30) der ersten Biegeeinheit (26.1) herum führende gekrümmte Kurve ist, um die Umfangsfläche (38) des Formflächenkörpers (30) der ersten Biegeeinheit (26.1) bewegbar sind zum Erfassen eines ersten Biegebereichs (36.1) und zum Umbiegen des ersten Biegebereichs (36.1) um den Formflächenkörper (30) der ersten Biegeeinheit (26.1),
wobei das erste Erfassungselement (32.1) und das zweite Erfassungselement (32.2) der zweiten Biegeeinheit (26.2) relativ zueinander beweglich sind und jeweils entlang einer Bewegungsbahn (RE A, RE B; RE2.1, RE2.2), die eine um die Umfangsfläche (38) des Formflächenkörpers (30) der zweiten Biegeeinheit (26.2) herum führende gekrümmte Kurve ist, um die Umfangsfläche (38) des Formflächenkörpers (30) der zweiten Biegeeinheit (26.2) bewegbar sind zum Erfassen eines zweiten Biegebereichs (36.2) und zum Umbiegen des zweiten Biegebereichs (36.2) um den Formflächenkörper (30) der zweiten Biegeeinheit (26.1).

2. Biegevorrichtung (10) nach Anspruch 1, **dadurch gekennzeichnet,**
**dass** eine dritte Biegeeinheit (26.3) vorgesehen ist, die ebenfalls einen sich quer zu der Biegeebene (22) erstreckenden Formflächenkörper (30) mit einer als Formfläche (34) zum Formen eines Biegebereichs (36.3) des Leiters (12) ausgebildeten Umfangsfläche (38) und ein erstes Erfassungselement (32.1) oder ein erstes und ein zweites Erfassungselement (32.1, 32.2) aufweist, wobei das oder die Erfassungselement(e) (32.1, 32.2) entlang einer Bewegungsbahn (RE A, RE B; RE3.1, RE3.2) um die Umfangsfläche (38) bewegbar sind zum Erfassen eines dritten Biegebereichs (36.3) und/oder Umbiegen des dritten Biegebereichs (36.3) um den Formflächenkörper (30) der dritten Biegeeinheit (26.3), wobei die Relativbewegungseinrichtung (28) zum Relativbewegen der ersten bis dritten Biegeeinheit (26.1, 26.2, 26.3) in oder parallel zu der Biegeebene (22) ausgebildet ist.

3. Biegevorrichtung (10) nach Anspruch 1 oder 2, **dadurch gekennzeichnet,**
**dass** die Relativbewegungseinrichtung (28)
3.1 eine erste Bewegungseinrichtung (44.1) zum Bewegen der ersten Biegeeinheit (26.1) in der Biegeebene (22) aufweist und/oder
3.2 eine zweite Bewegungseinrichtung (44.2) zum Bewegen der zweiten Biegeeinheit (26.2) in der Biegeebene (22) aufweist und/oder
3.3 eine dritte Bewegungseinrichtung (44.3) zum Bewegen der dritten Biegeeinheit (26.3) in der Biegeebene (22) aufweist und/oder
3.4 zum linearen Bewegen wenigstens einer, mehrerer oder aller der Biegeeinheiten (26.1, 26.2, 26.3) ausgebildet ist.

4. Biegevorrichtung (10) nach Anspruch 2 oder 3, **gekennzeichnet durch** wenigstens eines oder mehrere der folgenden Merkmale:
4.1 dass die Relativbewegungseinrichtung (28) eine erste bis dritte Bewegungseinheit (45.1, 45.2, 45.3) aufweist, die zum relativen Bewegen zueinander ausgebildet sind, wobei die erste Biegeeinheit (26.1) auf der ersten Bewegungseinheit (45.1) angeordnet ist, die zweite Biegeeinheit (26.2) auf der zweiten Bewegungseinheit (45.2) angeordnet ist und die dritte Biegeeinheit (26.3) auf der dritten Bewegungseinheit (45.3) angeordnet ist,
4.2 dass jede Biegeeinheit (26.1, 26.2, 26.3) den Formflächenkörper (30) als Biegeelement aufweist und ihre Erfassungselemente (32.1, 32.2) als um eine Mittelachse (M) des Formflächenkörpers (30) drehbare Rotationselemente (42.1, 42.2) ausgebildet sind,
4.3 dass die Umfangsfläche (38) eine in bezüglich einer Mittelachse (M) des Formflächenkörpers (30) axialer Draufsicht gesehen kreisförmig oder kreissegmentförmige Anlagefläche aufweist, deren Mittelpunkt dem Mittelpunkt der Biegung entspricht.

5. Biegevorrichtung (10) nach einem der voranstehenden Ansprüche, **gekennzeichnet durch** wenigstens eines oder mehrere der folgenden Merkmale:
5.1 dass das erste und das zweite Erfassungselement (32.1, 32.2) derart bewegbar sind, dass sie den Leiter (12) um den Formflächenkörper (30) herum umbiegen,
5.2 dass das erste und/oder das zweite Erfassungselement (32.1, 32.2) eine ebene Erfassungsfläche (54) zum Gegenhalten und/oder Formen des Leiters (12) aufweisen,
5.3 dass das erste und das zweite Erfassungselement (32.1, 32.2) wenigstens einer der Biegeeinheiten (26.1, 26.2, 26.3) in einer Grundstellung aneinander anliegen und aus der Grundstellung heraus voneinander weg bewegbar sind.

6. Biegevorrichtung (10) nach einem der voranstehenden Ansprüche, **gekennzeichnet durch** wenigstens eines oder mehrere der folgenden Merkmale:
6.1 dass die Bewegungsbahn (RE A, RE B; RE1.1, RE1.2; RE2.1, RE2.2; RE3.1, RE3.2) des ersten und/oder zweiten Erfassungselements (32.1, 32.2) aller der Biegeeinheiten (26.1, 26.2, 26.3) eine um die Umfangsfläche (38) herum führende gekrümmte Kurve ist,
6.2 dass die Bewegungsbahn (RE A, RE B; RE1.1, RE1.2; RE2.1, RE2.2; RE3.1, RE3.2) des ersten und/oder zweiten Erfassungselements (32.1, 32.2) wenigstens einer, mehrerer oder aller der Biegeeinheiten (26.1, 26.2, 26.3) in einem Winkelbereich von mehr als 180° um den Formflächenkörper herum führt,
6.3 dass das erste und/oder zweite Erfassungselements (32.1, 32.2) wenigstens einer, mehrerer oder aller der Biegeeinheiten (26.1, 26.2, 26.3) um 360° um den Formflächenkörper herum bewegbar ist,
6.4 dass das erste Erfassungselement (32.1) um eine Mittelachse (M) des Formflächenkörpers (30) herum kreisförmig bewegbar ist,
6.5 dass das zweite Erfassungselement (32.2) um eine Mittelachse (M) des Formflächenkörpers (30) herum kreisförmig bewegbar ist.

7. Biegevorrichtung nach Anspruch 2 oder nach Anspruch 2 und einem der Ansprüche 3 bis 6, **dadurch gekennzeichnet,**
**dass** die erste und die dritte Biegeeinheit (26.1, 26.3) entlang einer ersten linearen Bewegungsrichtung (x) aufeinander zu und voneinander weg bewegbar sind und die zwischen der ersten und der dritten Biegeeinheit (26.1, 26.3) angeordnete zweite Biegeeinheit (26.2) in einer zweiten linearen Bewegungsrichtung (y) bewegbar ist, die sich quer zu der ersten Bewegungsrichtung (x) erstreckt.

8. Biegevorrichtung (10) nach einem der voranstehenden Ansprüche, **dadurch gekennzeichnet, dass** die Bewegung der Erfassungselemente (32.1, 32.2) unterschiedlicher Biegeeinheiten (26.1, 26.2, 26.3) unterschiedlich bewegbar und/oder ansteuerbar sind.

9. Biegeverfahren zum zweidimensionalen, in oder parallel zu einer Biegeebene (22) durchzuführenden Biegen eines elektrischen Leiters (12), **gekennzeichnet durch**:
Einführen des Leiters (12) in eine sich in einer Grundstellung befindlichen Biegevorrichtung (10) nach einem der voranstehenden Ansprüche,
und Biegen des Leiters (12) durch Relativbewegen der Biegeeinheiten (26.1, 26.2, 26.3) und Bewegen der Erfassungselemente (32.1, 32.2) der Biegeeinheiten (26.1, 26.2, 26.3) entlang der Bewegungsbahn (RE A, RE B; RE1.1, RE1.2; RE2.1, RE2.2; RE3.1, RE3.2).

10. Biegeverfahren nach Anspruch 9, umfassend einen oder mehrere der Schritte:
10.1 Einstellen der Grundstellung derart, dass alle Formflächenkörper (30) der ersten bis dritten Biegeeinheit (26.1, 26.2, 26.3) auf einer Seite des zu biegenden Leiters (12) und alle Erfassungselemente (32.1, 32.2) der ersten bis dritten Biegeeinheit (26.1, 26.2, 26.3) auf der anderen Seite des zu biegenden Leiters (12) angeordnet sind,
10.2 aufeinander zu Bewegen der ersten und dritten Biegeeinheit (26.1, 26.3) in einer ersten Bewegungsrichtung (x) und Bewegen der zwischen der ersten und dritten Biegeeinheit (26.1, 26.3) angeordneten zweiten Biegeeinheit (26.2) in einer zweiten, quer zu der ersten Bewegungsrichtung (x) verlaufenden Bewegungsrichtung (y) von der ersten und dritten Biegeeinheit (26.1, 26.3) weg,
10.3 voneinander weg Drehen des ersten und des zweiten Erfassungselements (32.1, 32.2) der zweiten Biegeeinheit (26.2) in entgegengesetzter Drehrichtung,
10.4 Drehen der ersten Erfassungselemente der ersten und dritten Biegeeinheit (26.1, 26.2) in entgegengesetzte Richtungen von der zweiten Biegeeinheit (26.2) weg;
10.5 Drehen der ersten und zweiten Erfassungselemente (32.1, 32.2) der ersten und dritten Biegeeinheit (26.1, 26.2) in die gleiche Drehrichtung, wobei eines davon voreilend und das andere nacheilend bewegt wird;
10.6 Entnehmen des fertig gebogenen Leiters (12),
10.7 Zurückfahren der Biegevorrichtung (10) nach Entnahme des fertig gebogenen Leiters (12) in die Grundstellung.

11. Biegeverfahren nach Anspruch 9, umfassend einen oder mehrere der Schritte:
11.1 Einstellen der Grundstellung derart, dass der Formflächenkörper (30) der ersten Biegeeinheit (26.1) und die Erfassungselemente (32.1, 32.2) der zweiten Biegeeinheit (26.2) auf einer Seite des zu biegenden Leiters (12) und der Formflächenkörper (30) der zweiten Biegeeinheit (26.1) und das wenigstens eine Erfassungselemente (32.1, 32.2) der ersten Biegeeinheit (26.1) auf der anderen Seite des zu biegenden Leiters (12) angeordnet sind,
11.2 Bewegen der ersten Biegeeinheit (26.1) in einer ersten Bewegungsrichtung (x) auf die zweite Biegeeinheit (26.2) zu und Wegbewegen der zweiten Biegeeinheit (26.2) in einer zweiten, quer zu der ersten Bewegungsrichtung (x) verlaufenden Bewegungsrichtung (y) von der ersten Biegeeinheit (26.1) weg,
11.3 Drehen des wenigstens einen Erfassungselements (32.1, 32.2) der ersten Biegeeinheit (26.1), insbesondere durch voneinander weg Drehen des ersten und des zweiten Erfassungselements (32.1, 32.2) der ersten Biegeeinheit (26.1) in entgegengesetzter Drehrichtung, und voneinander weg Drehen des ersten und des zweiten Erfassungselements (32.1, 32.2) der zweiten Biegeeinheit (26.2) in entgegengesetzter Drehrichtung,
11.4 Drehen des wenigstens einen Erfassungselements (32.1, 32.2) der ersten Biegeeinheit (26.1) entgegengesetzt zum Drehen der Erfassungselemente (32.1, 32.2) der zweiten Biegeeinheit (26.2);
11.5 Entfernen der Elemente (32.1, 32.2; 30) der dritten Biegeeinheit (26.3), falls an der Biegevorrichtung (10) vorhanden, für den gesamten Biegevorgang aus dem Biegeweg des Leiters (12),
11.6 Entnehmen des fertig gebogenen Leiters (12),
11.7 Zurückfahren der Biegevorrichtung (10) nach Entnahme des fertig gebogenen Leiters (12) in die Grundstellung.

12. Biegeverfahren nach einem der Ansprüche 9 bis 11, **dadurch gekennzeichnet,**
**dass** das erste und das zweite Erfassungselement (26.1, 26.2) der jeweilig benutzten Biegeeinheit (26.1, 26.2, 26.3) in der Grundstellung aneinander anliegen.

13. Biegevorrichtung (10) nach einem der Ansprüche 1 bis 9, **gekennzeichnet durch** eine Steuerung (60), die dazu eingerichtet ist, die Biegevorrichtung (10) zum Durchführen des Biegeverfahrens nach einem der Ansprüche 10 bis 12 anzusteuern.

14. Computerprogrammprodukt, umfassend maschinenlesbare Steueranweisungen, die wenn in eine Steuerung (60) einer Biegevorrichtung (10) nach einem der Ansprüche 1 bis 9 geladen, die Biegevorrichtung (10) veranlassen, das Biegeverfahren nach einem der Ansprüche 10 bis 12 durchzuführen.

## Claims

1. Bending device (10) for two-dimensional bending of an electrical conductor (12) to be carried out in a bending plane (22) or parallel to a bending plane (22), the device comprising
a first bending unit (26.1) and a second bending unit (26.2), wherein the first bending unit (26.1) comprises a shaping surface body (30) extending transversely to the bending plane (22) and having a circumferential surface (38) designed as a shaping surface (34) for shaping a first bending area (36.1) of the electrical conductor (12), and the second bending unit (26.2) comprises a shaping surface body (30) extending transversely to the bending plane (22) and having a circumferential surface (38) designed as a shaping surface (34) for shaping a second bending area (36.2) of the electrical conductor (12), **characterized by** a relative movement device (28) for relatively moving the first bending unit (26.1) and the second bending unit (26.2) to each other in the bending plane (22) or parallel to the bending plane (22),
wherein the first bending unit (26.1) comprises a first gripping element (32.1) and a second gripping element (32.2), and the second bending unit (26.2) comprises a first gripping element (32.1) and a second gripping element (32.2),
wherein the first gripping element (32.1) and the second gripping element (32.2) of the first bending unit (26.1) are movable relative to each other and are movable around the circumferential surface (38) of the shaping surface body (30) of the first bending unit (26.1) along a movement path (RE A, RE B; RE1.1, RE1.2), which is an arched curve leading around the circumferential surface (38) of the shaping surface body (30) of the first bending unit (26.1), in order to grip a first bending area (36.1) and bend the first bending area (36.1) around the shaping surface body (30) of the first bending unit (26.1), wherein the first gripping element (32.1) and the second gripping element (32.2) of the second bending unit (26.2) are movable relative to each other and are movable around the circumferential surface (38) of the shaping surface body (30) of the second bending unit (26.2) along a movement path (REA, RE B; RE2.1, RE2.2), which is an arched curve leading around the circumferential surface (38) of the shaping surface body (30) of the second bending unit (26.2), in order to grip a second bending area (36.1) and bend the second bending area (36.1) around the shaping surface body (30) of the second bending unit (26.1).

2. Bending device (10) according to claim 1, **characterized in that** a third bending unit (26.3) is provided which also comprises a shaping surface body (30) extending transversely to the bending plane (22) and having circumferential surface (38) designed as shaping surface (34) for shaping a bending area (36.3) of the conductor (12), and a first gripping element (32.1) or a first and second gripping element (32.1, 32.2), wherein the gripping element(s) (32.1, 32.2) are movable around the circumferential surface (38) along a movement path (RE A, RE B; RE3.1, RE3.2) for gripping a third bending area (36.3) and/or bending the third bending area (36.3) around the shaping surface body (30) of the third bending unit (26.3), wherein the relative movement device (28) is designed for relatively moving the first to third bending units (26.1, 26.2, 26.3) in or parallel to the bending plane (22).

3. Bending device (10) according to claim 1 or 2, **characterized in that** the relative movement device (28)
3.1 includes a first movement device (44.1) for moving the first bending unit (26.1) in the bending plane (22) and/or
3.2 includes a second movement device (44.2) for moving the second bending unit (26.2) in the bending plane (22) and/or
3.3. includes a third movement device (44.3) for moving the third bending unit (26.3) in the bending plane (22) and/or
3.4 is designed for linearly moving at least one, several or all of the bending units (26.1, 26.2, 26.3).

4. Bending device (10) according to claim 2 or 3, **characterized by** at least one or more of the following features:
4.1 that the relative movement device (28) includes a first to third movement unit (45.1, 45.2, 45.3) that are designed for relative movement to each other, wherein the first bending unit (26.1) is arranged on the first movement unit (45.1), the second bending unit (26.2) is arranged on the second movement unit (45.2) and the third bending unit (26.3) is arranged on the third movement unit (45.3),
4.2 that each bending unit (26.1, 26.2, 26.3) has the shaping surface body (30) as a bending element and that its gripping elements (32.1, 32.2) are designed as rotation elements (42.1, 42.2) rotatable about a center axis (M) of the shaping surface body (30),
4.3 that the circumferential surface (38) has a circular or circular segment-shaped contact surface in a top view with respect to a center axis (M) of the shaping surface body (30), the center of the contact surface corresponding to the center of the bend.

5. Bending device (10) according to any one of the preceding claims, **characterized by** at least one or more of the following features:
5.1 that the first and second gripping elements (32.1, 32.2) are movable so that they bend the conductor (12) around the shaping surface body (30),
5.2 that the first and/or the second gripping elements (32.1, 32.2) have a flat seizing surface (54) for holding against and/or shaping the conductor,
5.3 that the first and the second gripping elements (32.1, 32.2) of at least one of the bending units (26.1, 26.2, 26.3) lie against each other in a basic position and are movable away from each other from the basic position.

6. Bending device (10) according to any one of the preceding claims, **characterized by** at least one or more of the following features:
6.1 that the movement path (RE A, RE B; RE1.1, RE1.2; RE2.1, RE2.2; RE3.1, RE3.2) of the first and/or second gripping elements (32.1, 32.2) of all bending units (26.1, 26.2, 26.3) is an arched curve leading around the circumferential surface (38),
6.2 that the movement path (RE A, RE B; RE1.1, RE1.2; RE2.1, RE2.2; RE3.1, RE3.2) of the first and/or second gripping elements (32.1, 32.2) of at least one, several or all of the bending units (26.1, 26.2, 26.3) leads around the shaping surface body in an angular range of more than 180°,
6.3 that the first and/or second gripping elements (32.1. 32.2) of at least one, several or all of the bending units (26.1, 26.2, 26.3) are movable around the shaping surface body by 360°,
6.4 that the first gripping element (32.1) is movable in a circular manner around a center axis (M) of the shaping surface body (30),
6.5 that the second gripping element (32.2) is movable in a circular manner around a center axis (M) of the shaping surface body (30).

7. Bending device (10) according to claim 2 or according to claim 2 and any one of claims 3 to 6, **characterized in that**
the first and the third bending units (26.1, 26.3) are movable to and away from each other along a first linear direction of movement (x) and the second bending unit (26.2) disposed between the first and the third bending units (26.1, 26.3) is movable in a second linear direction of movement (y) that extends transversely to the first direction of movement (x).

8. Bending device (10) according to any one of the preceding claims, **characterized in that** the movement of the gripping elements (32.1, 32.2) of different bending units (26.1, 26.2, 26.3) can be moved and/or controlled differently.

9. Bending method for two-dimensional bending of an electrical conductor (12) to be carried out in a bending plane (22) or parallel to a bending plane (22), the method **characterized by**:
inserting the conductor (12) into a bending device (10) according to any one of the preceding claims which is in a basic position,
and bending the conductor (12) by relatively moving the bending units (26.1, 26.2, 26.3) and moving the gripping elements (32.1, 32.2) of the bending units (26.1, 26.2, 26.3) along the movement path (RE A, RE B; RE1.1, RE1.2; RE 2.1, RE2.2; RE3.1, RE3.2).

10. Bending method according to claim 9, comprising one or more of the steps:
10.1 setting the basic position in such a way that all shaping surface bodies (30) of the first to third bending units (26.1, 26.2, 26.3) are arranged on one side of the conductor (12) to be bent and all gripping elements (32.1, 32.2) of the first to third bending units (26.1, 26.2, 26.3) are arranged on the other side of the conductor (12) to be bent,
10.2 moving the first and the third bending units (26.1, 26.3) towards each other in a first direction of movement (x) and moving the second bending unit (26.2) disposed between the first and the third bending units (26.1, 26.3) away from the first and the third bending units (26.1, 26.3) in a second direction of movement (y) running transversely to the first direction of movement (x),
10.3 rotating the first and the second gripping elements (32.1, 32.2) of the second bending unit (26.2) away from each other in the opposite direction of rotation,
10.4 rotating the first gripping elements of the first and the second bending units (26.1, 26.2) away from the second bending unit (26.2) in opposite directions;
10.5 rotating the first and the second gripping elements (321, 32.2) of the first and the third bending units (26.1, 26.2) in the same direction of rotation, one of the said elements being leading and the other one trailing;
10.6 removing the finished bent conductor (12);
10.7 returning the bending device (10) to the basic position upon removal of the finished bent conductor (012).

11. Bending method according to claim 9, comprising one or more of the steps:
11.1 setting the basic position in such a way that the shaping surface body (30) of the first bending unit (26.1) and the gripping elements (32.1, 32.2) of the second bending unit (26.2) are arranged on one side of the conductor (12) to be bent and the shaping surface body (30) of the second bending unit (26.2) and the at least one gripping element (32.1, 32.2) of the first bending unit (26.1) are arranged on the other side of the conductor (12) to be bent,
11.2 moving the first bending unit (26.1) towards the second bending unit (26.2) in a first direction of movement (x) and moving the second bending unit (26.2) away from the first bending unit (26.1) in a second direction of movement (y) running transversely to the first direction of movement (x),
11.3 rotating the at least one gripping element (32.1, 32.2) of the first bending unit (26.1), in particular by rotating the first and the second gripping elements (32.1, 32.2) of the first bending unit (26.1) away from each other in the opposite direction of rotation and rotating the first and the second gripping elements (32.1, 32.2) of the second bending unit (26.2) in the opposite direction of rotation,
11.4 rotating the at least one gripping element (32.1, 32.2) of the first bending unit (26.1) oppositely to the rotation of the gripping elements (32.1, 32.2) of the second bending unit (26.2),
11.5 removing the elements (32.1, 32.2; 30) of the third bending unit (26.3), if present on the bending device (10), from the bending path of the conductor (12) for the entire bending procedure,
11.6 removing the finished bent conductor (12),
11.7 returning the bending device (10) to the basic position upon removal of the finished bent conductor (12).

12. Bending method according to any one of claims 9 to 11, **characterized in that** the first and the second gripping elements (26.1, 26.2) of the bending unit (26.1, 26.2, 26.3) respectively used lie against each other in the basic position.

13. Bending device (10) according to any one of claims 1 to 9, **characterized by** a controller (60) configured to control the bending device (10) for carrying out the bending method according to any one of claims 10 to 12.

14. Computer program product, comprising machine-readable control instructions which when loaded to a bending device (10) according to any one of claims 1 to 9 cause the bending device (10) to carry out the bending method according to any one of claims 10 to 12.

## Revendications

1. Dispositif de pliage (10) pour le pliage bidimensionnel d'un conducteur électrique (12) à réaliser dans un plan de pliage (22) ou parallèlement à un plan de pliage (22), le dispositif comprenant
une première unité de pliage (26.1) et une deuxième unité de pliage (26.2), la première unité de pliage (26.1) comprenant un corps de surface de formage (30) s'étendant transversalement au plan de pliage (22) et présentant une surface circonférentielle (38) conçue comme une surface de formage (34) pour former une première zone de pliage (36. 1) du conducteur électrique (12), et la deuxième unité de pliage (26.2) comprenant un corps de surface de formage (30) s'étendant transversalement au plan de pliage (22) et ayant une surface circonférentielle (38) conçue comme une surface de formage (34) pour former une deuxième zone de pliage (36.2) du conducteur électrique (12),
**caractérisé par** un dispositif de mouvement relatif (28) pour déplacer relativement la première unité de pliage (26.1) et la deuxième unité de pliage (26.2) l'une par rapport à l'autre dans le plan de pliage (22) ou parallèlement au plan de pliage (22),
dans lequel la première unité de pliage (26.1) comprend un premier élément de préhension (32.1) et un deuxième élément de préhension (32.2), et la deuxième unité de pliage (26.2) comprend un premier élément de préhension (32.1) et un deuxième élément de préhension (32.2),
dans lequel le premier élément de préhension (32.1) et le deuxième élément de préhension (32.2) de la première unité de pliage (26.1) sont mobiles l'un par rapport à l'autre et sont mobiles autour de la surface circonférentielle (38) du corps de la surface de formage (30) de la première unité de pliage (26.1) le long d'une trajectoire de mouvement (RE A, RE B; RE1.1, RE1.2), qui est une courbe arquée menant autour de la surface circonférentielle (38) du corps de la surface de formage (30) de la première unité de pliage (26.1), afin de saisir une première zone de pliage (36.1) et de plier la première zone de pliage (36.1) autour du corps de la surface de formage (30) de la première unité de pliage (26.1),
dans lequel le premier élément de préhension (32.1) et le deuxième élément de préhension (32.2) de la première unité de pliage (26.2) sont mobiles l'un par rapport à l'autre et sont mobiles autour de la surface circonférentielle (38) du corps de la surface de formage (30) de la deuxième unité de pliage (26.2) le long d'une trajectoire de mouvement (RE A, RE B; RE2.1, RE2.2), qui est une courbe arquée menant autour de la surface circonférentielle (38) du corps de la surface de formage (30) de la deuxième unité de pliage (26.2), afin de saisir une deuxième zone de pliage (36.1) et de plier la deuxième zone de pliage (36.1) autour du corps de la surface de formage (30) de la deuxième unité de pliage (26.1).

2. Dispositif de pliage (10) selon la revendication 1, **caractérisé en ce que** une troisième unité de pliage (26.3) est prévue, qui comprend également un corps de surface de formage (30) s'étendant transversalement au plan de pliage (22) et ayant une surface circonférentielle (38) conçue comme surface de formage (34) pour former une zone de pliage (36.3) du conducteur (12), et un premier élément de préhension (32.1) ou un premier et un deuxième élément de préhension (32.1, 32.2), dans lequel le ou les éléments de préhension (32.1, 32. 2) sont mobiles autour de la surface circonférentielle (38) le long d'une trajectoire de mouvement (RE A, RE B; RE3.1, RE3.2) pour saisir une troisième zone de pliage (36.3) et/ou plier la troisième zone de pliage (36.3) autour du corps de la surface de formage (30) de la troisième unité de pliage (26.3), le dispositif de mouvement relatif (28) étant conçu pour déplacer relativement la première à la troisième unité de pliage (26.1, 26.2, 26.3) dans le plan de pliage (22) ou parallèlement à ce dernier.

3. Dispositif de pliage (10) selon la revendication 1 ou 2, **caractérisé en ce que** le dispositif de mouvement relatif (28)
3.1 comprend un premier dispositif de mouvement (44.1) pour déplacer la première unité de pliage (26.1) dans le plan de pliage (22) et/ou
3.2. comprend un deuxième dispositif de mouvement (44.2) pour déplacer la deuxième unité de pliage (26.2) dans le plan de pliage (22) et/ou
3.3. comprend un troisième dispositif de mouvement (44.3) pour déplacer la troisième unité de pliage (26.3) dans le plan de pliage (22) et/ou
3.4. est conçu pour déplacer linéairement au moins une, plusieurs ou toutes les unités de pliage (26.1, 26.2, 26.3).

4. Dispositif de pliage (10) selon la revendication 2 ou 3, **caractérisé par** au moins une ou plusieurs des caractéristiques suivantes:
4.1 le dispositif de mouvement relatif (28) comprend une première à une troisième unité de mouvement (45.1, 45.2, 45.3) qui sont conçues pour un mouvement relatif l'une par rapport à l'autre, la première unité de pliage (26.1) étant disposée sur la première unité de mouvement (45.1), la deuxième unité de pliage (26.2) étant disposée sur la deuxième unité de mouvement (45.2) et la troisième unité de pliage (26.3) étant disposée sur la troisième unité de mouvement (45.3),
4.2 chaque unité de pliage (26.1, 26.2, 26.3) a pour élément de pliage le corps de la surface de formage (30), et ses éléments de préhension (32.1, 32.2) sont conçus comme des éléments de rotation (42.1, 42.2) rotatifs autour d'un axe central (M) du corps de la surface de formage (30),
4.3 la surface circonférentielle (38) a une surface de contact circulaire ou en forme de segment circulaire dans une vue de dessus par rapport à un axe central (M) du corps de la surface de formage (30), le centre de la surface de contact correspondant au centre de la courbure.

5. Dispositif de pliage (10) selon l'une quelconque des revendications précédentes, **caractérisé par** au moins une ou plusieurs des caractéristiques suivantes:
5.1 le premier et le deuxième élément de préhension (32.1, 32.2) sont mobiles de manière à plier le conducteur (12) autour du corps de la surface de formage (30),
5.2 le premier et/ou le deuxième élément de préhension (32.1, 32.2) ont une surface de préhension plate (54) pour maintenir et/ou former le conducteur,
5.3 le premier et le deuxième élément de préhension (32.1, 32.2) d'au moins une des unités de pliage (26.1, 26.2, 26.3) se trouvent l'un contre l'autre dans une position de base et peuvent s'écarter l'un de l'autre à partir de la position de base.

6. Dispositif de pliage (10) selon l'une quelconque des revendications précédentes, **caractérisé par** au moins une ou plusieurs des caractéristiques suivantes:
6.1 la trajectoire (RE A, RE B; RE1.1, RE1.2; RE2.1, RE2.2; RE3.1, RE3.2) du premier et/ou du deuxième élément de préhension (32.1, 32.2) de toutes les unités de pliage (26.1, 26.2, 26.3) est une courbe en arc de cercle autour de la surface circonférentielle (38),
6.2 la trajectoire (RE A, RE B; RE1.1, RE1.2; RE2.1, RE2.2; RE3.1, RE3.2) du premier et/ou du deuxième élément de préhension (32.1, 32.2) d'au moins une, plusieurs ou toutes les unités de pliage (26.1, 26.2, 26.3) fait le tour du corps de la surface de formage dans une plage angulaire de plus de 180°,
6.3 le premier et/ou le deuxième élément de préhension (32.1. 32.2) d'au moins une, plusieurs ou toutes les unités de pliage (26.1, 26.2, 26.3) sont mobiles autour du corps de la surface de formage sur 360°,
6.4 le premier élément de préhension (32.1) est mobile de manière circulaire autour d'un axe central (M) du corps de la surface de formage (30),
6.5 le deuxième élément de préhension (32.2) est mobile de manière circulaire autour d'un axe central (M) du corps de la surface de formage (30).

7. Dispositif de pliage (10) selon la revendication 2 ou selon la revendication 2 et l'une quelconque des revendications 3 à 6, **caractérisé en ce que**
la première et la troisième unité de pliage (26.1, 26.3) sont mobiles l'une par rapport à l'autre le long d'une première direction de mouvement linéaire (x) et la deuxième unité de pliage (26.2) disposée entre la première et la troisième unité de pliage (26.1, 26.3) est mobile dans une deuxième direction de mouvement linéaire (y) qui s'étend transversalement par rapport à la première direction de mouvement (x).

8. Dispositif de pliage (10) selon l'une quelconque des revendications précédentes, **caractérisé en ce que** les éléments de préhension (32.1, 32.2) des différentes unités de pliage (26.1, 26.2, 26.3) peut être déplacés et/ou commandés différemment.

9. Procédé de pliage pour le pliage bidimensionnel d'un conducteur électrique (12) à réaliser dans un plan de pliage (22) ou parallèlement à un plan de pliage (22), le procédé étant **caractérisé par**:
l'introduction du conducteur (12) dans un dispositif de pliage (10) selon l'une quelconque des revendications précédentes qui est en position de base,
le pliage du conducteur (12) en déplaçant relativement les unités de pliage (26.1, 26.2, 26.3) et en déplaçant les éléments de préhension (32.1, 32.2) des unités de pliage (26.1, 26.2, 26.3) le long de la trajectoire de déplacement (RE A, RE B; RE1.1, RE1.2; RE 2.1, RE2.2; RE3.1, RE3.2).

10. Procédé de pliage selon la revendication 9, comprenant une ou plusieurs des étapes suivantes:
10.1 régler la position de base de telle sorte que tous les corps de surface de formage (30) des première à troisième unités de pliage (26.1, 26.2, 26.3) soient disposés d'un côté du conducteur (12) à plier et que tous les éléments de préhension (32.1, 32.2) des première à troisième unités de pliage (26.1, 26.2, 26.3) soient disposés de l'autre côté du conducteur (12) à plier,
10.2 déplacer la première et la troisième unité de pliage (26.1, 26.3) l'une vers l'autre dans une première direction de mouvement (x) et déplacer la deuxième unité de pliage (26.2) disposée entre la première et la troisième unité de pliage (26.1, 26.3) en l'éloignant de la première et de la troisième unité de pliage (26.1, 26.3) dans une deuxième direction de mouvement (y) s'étendant transversalement à la première direction de mouvement (x), 10.3 faire tourner le premier et le deuxième élément de préhension (32.1, 32.2) de la deuxième unité de pliage (26.2) en les éloignant l'un de l'autre dans le sens de rotation opposé,
10.4 faire tourner les premiers éléments de préhension de la première et de la deuxième unité de pliage (26.1, 26.2) à l'écart de la deuxième unité de pliage (26.2) dans des directions opposées;
10.5 faire tourner dans le même sens de rotation le premier et le deuxième élément de préhension (321, 32.2) de la première et de la troisième unité de pliage (26.1, 26.2), l'un de ces éléments étant en tête et l'autre en queue;
10.6. retirer le conducteur cintré fini (12);
10.7 retourner le dispositif de pliage (10) à la position de base après le retrait du conducteur coudé fini (12).

11. Procédé de pliages selon la revendication 9, comprenant une ou plusieurs des étapes suivantes:
11.1 régler la position de base de telle sorte que le corps de la surface de formage (30) de la première unité de pliage (26.1) et les éléments de préhension (32.1, 32.2) de la deuxième unité de pliage (26. 2) sont disposés d'un côté du conducteur (12) à plier et le corps de la surface de formage (30) de la deuxième unité de pliage (26.2) et ledit au moins un élément de préhension (32.1, 32.2) de la première unité de pliage (26.1) sont disposés de l'autre côté du conducteur (12) à plier,
11.2 déplacer la première unité de pliage (26.1) vers la deuxième unité de pliage (26.2) dans une première direction de mouvement (x) et éloigner la deuxième unité de pliage (26.2) de la première unité de pliage (26.1) dans une deuxième direction de mouvement (y) transversale à la première direction de mouvement (x),
11.3 faire tourner ledit au moins un élément de préhension (32.1, 32.2) de la première unité de pliage (26.1), en particulier en faisant tourner le premier et le deuxième éléments de préhension (32.1, 32.2) de la première unité de pliage (26.1) à l'écart l'un de l'autre dans le sens inverse de la rotation et en faisant tourner le premier et le deuxième éléments de préhension (32.1, 32.2) de la deuxième unité de pliage (26.2) dans le sens inverse de la rotation,
11.4 faire tourner ledit au moins un élément de préhension (32.1, 32.2) de la première unité de pliage (26.1) dans le sens opposé à la rotation des éléments de préhension (32.1, 32.2) de la deuxième unité de pliage (26.2),
11.5 retirer les éléments (32.1, 32.2; 30) de la troisième unité de pliage (26.3), s'ils sont présents sur le dispositif de pliage (10), de la trajectoire de pliage du conducteur (12) pendant toute la procédure de pliage,
11.6 retirer le conducteur (12) cintré fini,
11.7 retourner le dispositif de pliage (10) à sa position de base après avoir retiré le conducteur cintré fini (12).

12. Procédé de pliage selon l'une quelconque des revendications 9 à 11, **caractérisé en ce que** le premier et le deuxième élément de préhension (26.1, 26.2) de l'unité de pliage (26.1, 26.2, 26.3) respectivement utilisés se trouvent l'un contre l'autre dans la position de base.

13. Dispositif de pliage (10) selon l'une quelconque des revendications 1 à 9, **caractérisé par** un contrôleur (60) configuré pour commander le dispositif de pliage (10) pour la mise en œuvre du procédé de pliage selon l'une quelconque des revendications 10 à 12.

14. Produit de programme d'ordinateur, comprenant des instructions de commande lisibles par machine qui, lorsqu'elles sont chargées dans un dispositif de pliage (10) selon l'une quelconque des revendications 1 à 9, amènent le dispositif de pliage (10) à exécuter la méthode de pliage selon l'une quelconque des revendications 10 à 12.
